# EUROPEAN PATENT APPLICATION

(11) **EP 4 210 294 A1**
(43) Date of publication of application: **12.07.2023**
(21) Application number: 20954399.0
(22) Date of filing: 22.09.2020
(51) Int. Cl.: H04L 51/00, H04W 76/14, H04W 88/04

(54) **COMMUNICATION METHOD AND APPARATUS**

(71) Applicant: Huawei Technologies Co., Ltd., Shenzhen, Guangdong 518129 (CN)
(72) Inventor: CHAI, Xiaomeng, Shenzhen, Guangdong 518129 (CN); XU, Xiuqiang, Shenzhen, Guangdong 518129 (CN); WU, Yiqun, Shenzhen, Guangdong 518129 (CN)
(74) Representative: Goddar, Heinz J.
(86) International application number: PCT/CN2020/116914
(87) International publication number: WO 2022/061545

(57) **Abstract**

Embodiments of this application relate to the field of wireless communication technologies, and provide a communication method and apparatus, to determine a communication mode between a cluster member and a network device. In this method, a first terminal device may receive first information sent by a second terminal device. The first terminal device may send identification information of the second terminal device to the network device, or the first terminal device may send identification information and the first information to the network device. The second terminal device may be a member node of a cluster to which the first terminal device belongs. Based on the foregoing solution, the first terminal device may send the identification information of the second terminal device, or the identification information of the second terminal device and the first information to the network device, to determine whether the network device is to communicate with the second terminal device by using a second beam selected by the second terminal device, or the network device is to communicate with the second terminal device through the first terminal device.

## Description

### TECHNICAL FIELD

This application relates to the field of wireless communication technologies, and in particular, to a communication method and apparatus.

### BACKGROUND

In new radio (new radio, NR), because there are a plurality of beams, user equipment (user equipment, UE) performs preliminary beam selection in a random access process. A network device configures, for the UE, a parameter for association between a synchronization signal block (synchronization signal and PBCH block, SSB) and a physical random access channel (physical random access channel, PRACH). During each time of random access, the UE may measure reference signal received power (reference signal received power, RSRP) of a plurality of SSBs, select one SSB from the SSBs based on RSRP measurement results, and perform random access on a PRACH resource associated with the selected SSB.

In a cluster access scenario, because a cluster member does not directly perform uplink communication with the network device, the network device cannot learn of an SSB selected by the cluster member. As a result, the network device does not know how to communicate with the cluster member.

### SUMMARY

This application provides a communication method and apparatus, to determine a communication mode between a cluster member and a network device.

According to a first aspect, a communication method is provided. The method may be performed by a first terminal device or a chip with a function similar to that of the first terminal device. The first terminal device may be a cluster head node. In this method, the first terminal device may receive first information sent by a second terminal device. The first information herein includes information indicating a second beam selected by the second terminal device. The first terminal device may send identification information of the second terminal device to a network device, or the first terminal device may send identification information and the first information to a network device. The second terminal device may be a member node of a cluster to which the first terminal device belongs.

Based on the foregoing solution, the first terminal device may send the identification information of the second terminal device, or the identification information of the second terminal device and the first information to the network device, to determine whether the network device is to communicate with the second terminal device by using the second beam selected by the second terminal device, or the network device is to communicate with the second terminal device through the first terminal device.

In a possible implementation, the first terminal device may determine, based on second information, whether to send the identification information to the network device or send the identification information and the first information to the network device. The second information herein may be information required for determining whether the first terminal device is to forward downlink data that is sent by the network device to the second terminal device.

Based on the foregoing solution, the first terminal device may determine, based on the second information, to send the identification information to the network device or send the identification information and the first information to the network device, to determine a communication mode between the second terminal device and the network device.

In a possible implementation, the first terminal device may send the second information to the network device. The first terminal device may receive first indication information sent by the network device, and send the identification information to the network device or send the identification information and the first information to the network device.

Based on the foregoing solution, the network device may determine the communication mode between the second terminal device and the network device based on the second information, so that the first indication information is sent to the first terminal device, to indicate the first terminal device to send the identification information to the network device, or indicate the first terminal device to send the identification information and the first information to the network device.

In a possible implementation, the first information may further include at least one of the following: quality of a sidelink channel between the first terminal device and the second terminal device, quality of a downlink channel between the second terminal device and the network device, or third information of the second terminal device, where the third information may indicate that the second terminal device expects to receive the downlink data sent by the network device, or may indicate that the second terminal device expects to receive the downlink data forwarded by the first terminal device.

Based on the foregoing solution, the second terminal device may send at least one of the foregoing information to the first terminal device, so that the first terminal device determines the communication mode between the second terminal device and the network device.

In a possible implementation, the second information may include at least one of the following: the quality of the sidelink channel between the first terminal device and the second terminal device, quality of a downlink channel between the first terminal device and the network device, the quality of the downlink channel between the second terminal device and the network device, load information of the first terminal device, or the third information.

Based on the foregoing solution, the first terminal device may determine the communication mode between the second terminal device and the network device based on at least one of the foregoing information.

In a possible implementation, if the third information in the first information indicates that the second terminal device expects to receive the downlink data sent by the network device, the first terminal device sends the identification information of the second terminal device and the first information to the network device; or if the third information in the first information indicates that the second terminal device expects to receive the downlink data forwarded by the first terminal device, the first terminal device sends the identification information to the network device.

Based on the foregoing solution, the second terminal device may send the expected communication mode between the second terminal device and the network device to the first terminal device, and the first terminal device determines the communication mode between the second terminal device and the network device based on expectation of the second terminal device.

In a possible implementation, the first terminal device may send the identification information to the network device on a time-frequency resource associated with the second beam selected by the second terminal device.

Based on the foregoing solution, when determining that the network device is to communicate with the second terminal device by using the second beam, the first terminal device may send the identification information to the network device on the time-frequency resource associated with the second beam, to reduce transmission resources.

In a possible implementation, the first terminal device may send second indication information to the second terminal device. The second indication information herein may indicate that the downlink data of the second terminal device is to be sent by the network device, or may indicate that the downlink data of the second terminal device is to be forwarded by the first terminal device.

Based on the foregoing solution, the first terminal device may indicate, to the second terminal device by using the second indication information, the communication mode between the second terminal device and the network device, so that an operation performed by the second terminal device when the second terminal device receives the downlink data can be omitted.

According to a second aspect, a communication method is provided. The method may be performed by a network device or a chip with a function similar to that of the network device. In the method, the network device may receive identification information of a second terminal device that is sent by a first terminal device. The network device may send downlink data of the second terminal device to the second terminal device by using a second beam selected by the second terminal device; or the network device may send downlink data of the second terminal device to the first terminal device by using a first beam selected by the first terminal device. It should be noted that, the first terminal device herein may be a cluster head node, and the second terminal device may be a member node of a cluster to which the first terminal device belongs.

In a possible implementation, the network device may send, based on second information, the downlink data of the second terminal device to the second terminal device by using the second beam selected by the second terminal device. Alternatively, the network device may send, based on the second information, the downlink data of the second terminal device to the first terminal device by using the first beam selected by the first terminal device. The second information herein may be information required for determining whether the first terminal device is to forward the downlink data of the second terminal device.

In a possible implementation, the second information may include at least one of the following: quality of a sidelink channel between the first terminal device and the second terminal device, quality of a downlink channel between the first terminal device and the network device, quality of a downlink channel between the second terminal device and the network device, load information of the first terminal device, or third information, where the third information indicates that the second terminal device expects to receive the downlink data sent by the network device, or indicates that the second terminal device expects to receive the downlink data forwarded by the first terminal device.

In a possible implementation, if the third information indicates that the second terminal device expects to receive the downlink data sent by the network device, the network device may send the downlink data of the second terminal device to the second terminal device by using the second beam selected by the second terminal device. If the third information indicates that the second terminal device expects to receive the downlink data forwarded by the first terminal device, the network device may send the downlink data of the second terminal device to the first terminal device by using the first beam selected by the first terminal device.

In a possible implementation, the network device may receive information about the first beam that is sent by the first terminal device. The first beam may be a beam selected by the first terminal device. The network device may determine, based on the information about the first beam, to send the downlink data of the second terminal device to the first terminal device by using the first beam selected by the first terminal device.

In a possible implementation, the network device may receive first information of the second terminal device that is sent by the first terminal device. The first information indicates information about the second beam selected by the second terminal device. The network device may determine, based on the information about the second beam, to send the downlink data of the second terminal device to the second terminal device by using the second beam selected by the second terminal device.

In a possible implementation, the second beam may be a beam determined based on a time-frequency resource for receiving the identification information.

According to a third aspect, a communication method is provided. The method may be performed by a second terminal device or a chip with a function similar to that of the second terminal device. The second terminal device may be a member node of a cluster to which a first terminal device belongs, and the first terminal device may be a cluster head node. In the method, the second terminal device may send first information to the first terminal device based on a measurement result of a beam of a network device. The first information herein may indicate information about a second beam selected by the second terminal device. The second terminal device may receive data. The data may be downlink data sent by the network device, or the data may be downlink data that is from the network device and that is forwarded by the first terminal device.

In a possible implementation, the second terminal device may receive second indication information. The second indication information may indicate whether the first terminal device is to forward the downlink data of the second terminal device. The second terminal device may receive, based on the second indication information, the downlink data sent by the network device or the downlink data that is from the network device and that is forwarded by the first terminal device.

In a possible implementation, the first information may include at least one of the following: quality of a sidelink channel between the first terminal device and the second terminal device, quality of a downlink channel between the second terminal device and the network device, or third information of the second terminal device, where the third information indicates that the second terminal device expects to receive the downlink data sent by the network device, or indicates that the second terminal device expects to receive the downlink data forwarded by the first terminal device.

In a possible implementation, if the third information indicates that the second terminal device expects to receive the downlink data sent by the network device, the second terminal device may receive the downlink data sent by the network device. If the third information indicates that the second terminal device expects to receive the downlink data forwarded by the first terminal device, the second terminal device may receive the downlink data forwarded by the first terminal device.

According to a fourth aspect, a communication apparatus is provided. The communication apparatus may include modules/units configured to perform any one of the first aspect or the possible implementations of the first aspect, or may include modules/units configured to perform any one of the second aspect or the possible implementations of the second aspect, or may include modules/units configured to perform any one of the third aspect or the possible implementations of the third aspect. For example, the communication apparatus may include a communication unit and a processing unit.

According to a fifth aspect, a communication apparatus is provided. The communication apparatus includes a processor and a memory. The memory is configured to store computer-executable instructions. When a controller runs, the processor executes the computer-executable instructions in the memory to perform, by using a hardware resource in the controller, the operation steps of the method according to any one of the first aspect or the possible implementations of the first aspect, or the operation steps of the method according to any one of the second aspect or the possible implementations of the second aspect, or the operation steps of the method according to any one of the third aspect or the possible implementations of the third aspect.

According to a sixth aspect, this application provides a computer-readable storage medium. The computer-readable storage medium stores instructions. When the instructions are run on a computer, the computer is enabled to perform the methods according to the foregoing aspects.

According to a seventh aspect, this application provides a computer program product storing instructions. When the computer program product runs on a computer, the computer is enabled to perform the methods according to the foregoing aspects.

In addition, for beneficial effects of the second aspect to the seventh aspect, refer to the beneficial effects shown in the first aspect. Details are not described herein again.

### BRIEF DESCRIPTION OF DRAWINGS

FIG. 1 is a first schematic diagram of a communication system according to an embodiment of this application;
FIG. 2 is a second schematic diagram of a communication system according to an embodiment of this application;
FIG. 3 is a first example flowchart of a communication method according to an embodiment of this application;
FIG. 4 is a schematic diagram of a second beam according to an embodiment of this application;
FIG. 5 is a second example flowchart of a communication method according to an embodiment of this application;
FIG. 6A and FIG. 6B are a third example flowchart of a communication method according to an embodiment of this application;
FIG. 7A and FIG. 7B are a fourth example flowchart of a communication method according to an embodiment of this application;
FIG. 8 is a fifth example flowchart of a communication method according to an embodiment of this application;
FIG. 9A and FIG. 9B are a sixth example flowchart of a communication method according to an embodiment of this application;
FIG. 10 is a first schematic diagram of a communication apparatus according to an embodiment of this application;
FIG. 11 is a schematic diagram of a terminal device according to an embodiment of this application;
FIG. 12 is a second schematic diagram of a communication apparatus according to an embodiment of this application; and
FIG. 13 is a block diagram of a communication apparatus according to an embodiment of this application.

### DESCRIPTION OF EMBODIMENTS

The following describes some terms in embodiments of this application, to facilitate understanding of a person skilled in the art.
(1) A cluster is a set including a plurality of terminal devices that have an association relationship. For example, the association relationship between the terminal devices in the cluster may mean that configured control information retrieval resources are the same, configured radio network temporary identifiers (radio network temporary identifiers, RNTIs) are the same, geographical locations are similar, owners are the same, and service types are the same.
(2) A cluster head node is a most crucial terminal device in a cluster, and functions of the cluster head node include but are not limited to forwarding data sent by a base station to a cluster member, assisting the cluster member in sending data to the base station, scheduling data receiving and sending of the cluster member terminal, and configuring a data transmission resource for the cluster member terminal.
(3) A cluster member node is a terminal device other than a cluster head node in a cluster.
(4) The terms "system" and "network" may be used interchangeably in embodiments of this application. The term "a plurality of means two or more, and another quantifier is similar to this. The term "and/or" describes an association relationship between associated objects and indicates that three relationships may exist. For example, A and/or B may indicate the following three cases: Only A exists, both A and B exist, and only B exists. In addition, an element (element) that appears in singular forms "a", "an", and "the" does not mean "one or only one" unless otherwise specified in the context, but means "one or more". For example, "a device" means one or more such devices. Further, "at least one of (at least one of) ..." means one or any combination of subsequent associated objects. For example, "at least one of A, B, and C" includes A, B, C, AB, AC, BC, or ABC.

Technical solutions in embodiments of this application may be applied to various communication systems, for example, a long term evolution (long term evolution, LTE) system, a worldwide interoperability for microwave access (worldwide interoperability for microwave access, WiMAX) communication system, a future 5th generation (5th Generation, 5G) system such as a new radio access technology (new radio access technology, NR), and a future communication system such as a 6G system.

All aspects, embodiments, or features are presented in this application by describing a system that may include a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

A network architecture and a service scenario described in embodiments of this application are intended to describe the technical solutions in embodiments of this application more clearly, and do not constitute a limitation on the technical solutions provided in embodiments of this application. A person of ordinary skill in the art may know that with the evolution of the network architecture and the emergence of new service scenarios, the technical solutions provided in embodiments of this application are also applicable to similar technical problems.

Embodiments of this application may be applied in a conventional typical network or a future UE-centric (UE-centric) network. A non-cell (Non-cell) network architecture is introduced to the UE-centric network. To be specific, a large quantity of small cells are deployed in a specific area to form a hyper cell (Hyper cell). Each small cell is a transmission point (Transmission Point, TP) or a transmission reception point (Transmission Reception Point, TRP) of the hyper cell, and is connected to a centralized controller (controller). When UE moves in the hyper cell, a network side device selects a new sub-cluster (sub-cluster) for the UE to serve the UE, to avoid real cell handover, and implement UE service continuity. The network side device includes a wireless network device. Alternatively, in the UE-centric network, a plurality of network side devices such as small cells may have independent controllers such as distributed controllers. Each small cell can independently schedule a user, and information is exchanged between small cells for a long time, so that the small cell can provide a coordinated service for the UE flexibly to some extent.

In embodiments of this application, different base stations may be base stations having different identifiers, or may be base stations that have a same identifier and that are deployed at different geographical locations. Before a base station is deployed, the base station does not know whether the base station is related to the scenario to which embodiments of this application are applied. Therefore, before deployment, the base station or a baseband chip needs to support a method provided in embodiments of this application. It may be understood that the foregoing base stations having the different identifiers may be base station identifiers, or may be cell identifiers or other identifiers.

In embodiments of this application, an NR network scenario in a wireless communication network is used as an example to describe some scenarios. It should be noted that the solutions in embodiments of this application may alternatively be applied to another wireless communication network, and a corresponding name may be replaced with a name of a corresponding function in the another wireless communication network.

The technical solutions provided in embodiments of this application may be applied to wireless communication between communication devices. The wireless communication between communication devices may include wireless communication between a network device and a terminal device, wireless communication between network devices, and wireless communication between terminal devices. In embodiments of this application, the term "wireless communication" may be referred to as "communication" for short, and the term "communication" may also be described as "data transmission", "information transmission", or "transmission".

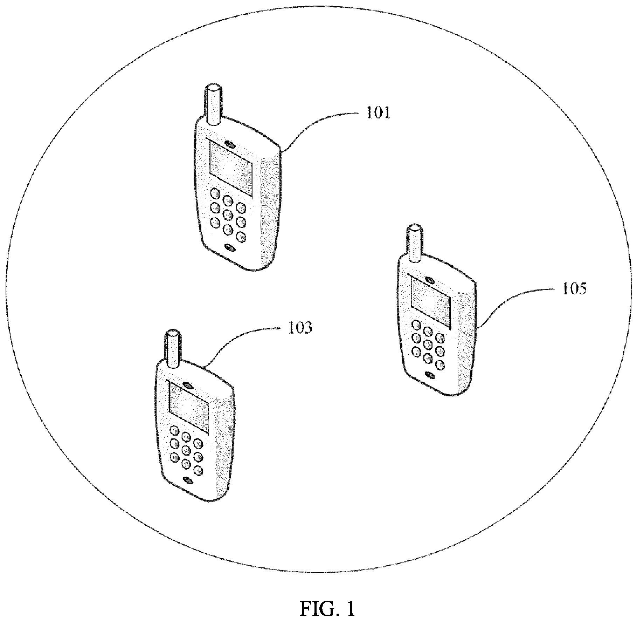

For ease of understanding embodiments of this application, a communication system shown in FIG. 1 is first used as an example to describe in detail a communication system applicable to embodiments of this application. FIG. 1 is a schematic diagram of a communication system applicable to a communication method according to an embodiment of this application. As shown in FIG. 1, the communication system 100 includes a terminal device 101 and a terminal device 103. A plurality of antennas may be configured for the terminal device 101 and the terminal device 103. Optionally, the communication system may further include a terminal device 105, and a plurality of antennas may be configured for the terminal device 105.

The terminal device in this application includes a device that provides a voice and/or data connectivity for a user. Specifically, the terminal device includes a device that provides a voice for the user, includes a device that provides data connectivity for the user, or includes a device that provides a voice and data connectivity for the user. For example, the terminal device may include a handheld device having a wireless connection function, or a processing device connected to a wireless modem. The terminal may communicate with a core network through a radio access network (radio access network, RAN), and exchange a voice or data with the RAN, or exchange a voice and data with the RAN. The terminal may include user equipment (user equipment, UE), a wireless terminal, a mobile terminal, a device-to-device communication (device-to-device, D2D) terminal, a vehicle-to-everything (vehicle-to-everything, V2X) terminal, a machine-to-machine/machine type communication (machine-to-machine/machine type communication, M2M/MTC) terminal, an internet of things (internet of things, IoT) terminal, a subscriber unit (subscriber unit), a subscriber station (subscriber station), a mobile station (mobile station), a remote station (remote station), an access point (access point, AP), a remote terminal (remote terminal), an access terminal (access terminal), a user terminal (user terminal), a user agent (user agent), a user device (user device), or the like. For example, the terminal may include a mobile phone (or referred to as a "cellular" phone), a computer with a mobile terminal, or a portable, pocket-sized, handheld, or computer built-in mobile apparatus. For example, the terminal may be a device such as a personal communications service (personal communications service, PCS) phone, a cordless telephone set, a session initiation protocol (session initiation protocol, SIP) phone, a wireless local loop (wireless local loop, WLL) station, or a personal digital assistant (personal digital assistant, PDA). The terminal may alternatively include a limited device, for example, a device with low power consumption, a device with a limited storage capability, or a device with a limited computing capability. For example, the terminal includes an information sensing device such as a barcode, radio frequency identification (radio frequency identification, RFID), a sensor, a global positioning system (global positioning system, GPS), or a laser scanner.

By way of example and not limitation, in embodiments of this application, the terminal may alternatively be a wearable device. The wearable device may also be referred to as a wearable intelligent device, an intelligent wearable device, or the like, and is a general term of wearable devices that are intelligently designed and developed for daily wear by using a wearable technology, for example, glasses, gloves, watches, clothes, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement all or a part of functions without depending on smartphones, for example, smart watches or smart glasses, and include devices that dedicated to only one type of application function and need to collaboratively work with other devices such as smartphones, for example, various smart bands, smart helmets, or smart jewelry for monitoring physical signs.

If the various terminals described above are located on a vehicle (for example, placed in the vehicle or installed in the vehicle), the terminals may be considered as vehicle-mounted terminals. For example, the vehicle-mounted terminals are also referred to as on board units (on board units, OBUs).

In embodiments of this application, an apparatus configured to implement a function of a terminal may be a terminal, or may be an apparatus, for example, a chip system, that can support the terminal in implementing the function. The apparatus may be installed in the terminal. In embodiments of this application, the chip system may include a chip, or may include a chip and another discrete component. In the technical solutions provided in embodiments of this application, the technical solutions provided in embodiments of this application are described by using an example in which the apparatus configured to implement the function of the terminal is the terminal

In this embodiment of this application, the terminal device 101, the terminal device 103, and the terminal device 105 may form a cluster, the terminal device 101 may be a cluster head node, and the terminal device 103 and the terminal device 105 may be cluster member nodes. In the communication system 100, the terminal device 101 may perform data transmission with the terminal device 103 and the terminal device 105. For example, the terminal device 101 may send data to the terminal device 103 and the terminal device 105, and the terminal device 103 and the terminal device 105 may send data to the terminal device 101.

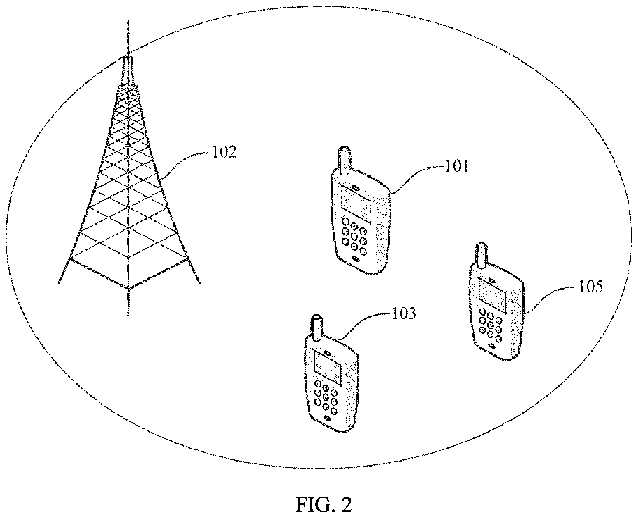

As shown in FIG. 2, the communication system may further include a network device 102. The network device in this application includes, for example, an access network (access network, AN) device such as a base station (for example, an access point), and may be a device that communicates with a wireless terminal over an air interface through one or more cells in an access network. Alternatively, for example, a network device in a vehicle-to-everything (vehicle-to-everything, V2X) technology is a road side unit (road side unit, RSU). The base station may be configured to mutually convert a received over-the-air frame and an IP packet, and serve as a router between the terminal and a remaining part of the access network. The remaining part of the access network may include an IP network. The RSU may be a fixed infrastructure entity supporting a V2X application, and may exchange a message with another entity supporting the V2X application. The network device may further coordinate attribute management of the air interface. For example, the network device may include an evolved NodeB (NodeB, eNB, or e-NodeB, evolved NodeB) in a long term evolution (long term evolution, LTE) system or a long term evolution-advanced (long term evolution-advanced, LTE-A) system, may include a next generation NodeB (next generation NodeB, gNB) in an evolved packet core (evolved packet core, EPC) network, a 5th generation (5th generation, 5G) mobile communication technology, or a new radio (new radio, NR) system (referred to as an NR system for short), or may include a central unit (central unit, CU) and a distributed unit (distributed unit, DU) in a cloud access network (cloud radio access network, Cloud RAN) system. This is not limited in embodiments of this application.

The network device may further include a core network device, and the core network device includes, for example, an access and mobility management function (access and mobility management function, AMF).

In embodiments of this application, an apparatus configured to implement a function of the network device may be a network device, or may be an apparatus, for example, a chip system, that can support the network device in implementing the function. The apparatus may be installed in the network device. In the technical solutions provided in embodiments of this application, the technical solutions provided in embodiments of this application are described by using an example in which the apparatus configured to implement the function of the network device is the network device.

The network device 102 may send data to a terminal device 101, a terminal device 103, or a terminal device 105 in a cluster. When sending the data, the network device 102 may send the data to a cluster head node (terminal device 101), and the cluster head node (terminal device 101) forwards, to cluster member nodes (terminal device 103 and the terminal device 105), the data sent by the network device. Alternatively, when sending the data, the network device 102 may separately send the data to the terminal device 101, the terminal device 103, and the terminal device 105.

However, in a random access process, the cluster member nodes such as the terminal device 103 and the terminal device 105 do not directly communicate with the network device 102, but form the cluster with the terminal device 101 to implement communication with the network device 102. As a result, the network device 102 cannot learn of beams selected by the cluster member nodes such as the terminal device 103 and the terminal device 105. Consequently, the network device 102 does not know how to communicate with the cluster member nodes.

Based on the foregoing problem, an embodiment of this application provides a communication method. The communication method in this application may be applied to a wireless communication system, for example, the communication system shown in FIG. 1 or FIG. 2. The communication system may include at least two terminal devices, or may further include at least one network device. The terminal devices may communicate with each other over a wireless air interface, and the network device may also communicate with a communication device over a wireless air interface. For example, the terminal devices may correspond to the terminal device 101 and the terminal device 103 shown in FIG. 1 or FIG. 2, and the network device may correspond to the network device 102 shown in FIG. 2.

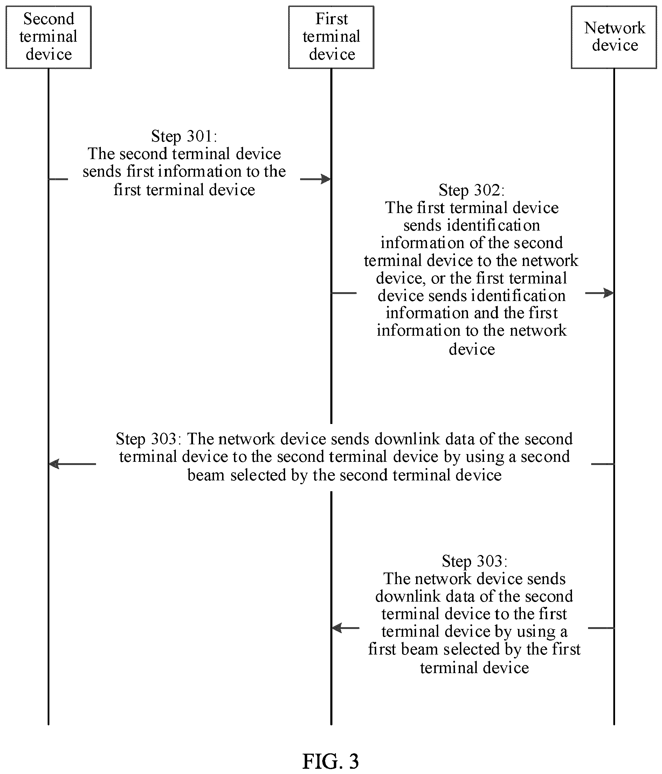

FIG. 3 is an example flowchart of a communication method according to an embodiment of this application from a perspective of device interaction. A first terminal device may be a cluster head node, and a second terminal device may be a cluster member node of a cluster to which the first terminal device belongs. The method may include the following steps.

Step 301: The second terminal device sends first information to the first terminal device.

The second terminal device may send the first information to the first terminal device based on measurement results of beam reference signals of beams of a network device. The first terminal device and the second terminal device may separately measure the beam reference signals sent by the network device. The beam reference signal is a reference signal used for beam management, and each beam reference signal corresponds to a beam for sending the beam reference signal. For example, the first terminal device and the second terminal device may separately measure synchronization signal blocks (synchronization signal blocks, SSBs) sent by the network device. The first terminal device and the second terminal device may measure one or more of reference signal received power (reference signal received, RSRP), reference signal received quality (reference signal received quality, RSRQ), or a signal to interference plus noise ratio (signal to interference plus noise ratio, SINR) of the beam reference signal. The measurement result of the beam reference signal of the beam may be one or more of the RSRP, the RSRQ, and the SINR that are obtained through measurement, or may be representations of the RSRP, the RSRQ, and the SINR that are obtained through measurement. The first terminal device and the second terminal device may separately select, based on the measurement results, beams from the beams sent by the network device. The beam selected by the first terminal device may be referred to as a first beam, and the beam selected by the second terminal device may be referred to as a second beam. For example, the first terminal device and the second terminal device may separately select beams whose RSRP measurement results are greater than a specified threshold, or separately select beams whose RSRP is the largest.

In an embodiment, the first information may include information about the second beam selected by the second terminal device. For example, the first information may include an SSB index of an SSB selected by the second terminal device or indication information of the SSB index. The SSB index may be an index of the selected SSB in an SSB set. For example, NR supports a maximum of 64 SSBs, and the first information may include an index of the SSB selected by the second terminal device in the 64 SSBs or indication information of the index of the selected SSB in the 64 SSBs. Alternatively, the SSB index may be an index in a set including a maximum supported quantity of SSBs in a current frequency range or indication information of the index. For example, in a frequency range (frequency range, FR) 1, when a carrier frequency is less than or equal to X, a maximum supported quantity of SSBs is 4. In this case, the first information may include an index of the SSB selected by the second terminal device in the four SSBs or indication information of the index of the selected SSB in the four SSBs. For another example, in an FR1, when a carrier frequency is greater than X, a maximum supported quantity of SSBs is 8. In this case, the first information may include an index of the SSB selected by the second terminal device in the eight SSBs or indication information of the index of the selected SSB in the eight SSBs. For still another example, in a frequency range FR2, if a maximum supported quantity of SSBs is 64, the first information may include an index of the SSB selected by the second terminal device in the 64 SSBs or indication information of the index of the selected SSB in the 64 SSBs. X herein may be an integer greater than 0. Alternatively, the SSB index may be an index in an SSB set sent by the network device. For example, the network device may use signaling to indicate the sent SSB set. The SSB set may include K SSBs. The first information may include an index of the SSB selected by the second terminal device in the K SSBs or indication information of the index of the selected SSB in the K SSBs. K herein may be an integer greater than 0.

In another embodiment, the first information may alternatively include a measurement result of a beam reference signal of the second beam selected by the second terminal device, or measurement results of beam reference signals of a plurality of beams selected by the second terminal device. The measurement result may be a quantized measurement result. For example, the measurement result may be identification information of the measurement result, and identification information of each measurement result may correspond to one measurement result range. Alternatively, in the measurement results of the beam reference signals of the plurality of beams included in the first information, a largest or smallest measurement result is an absolute measurement result, and measurement results of beam reference signals of the remaining beams may be differences relative to the largest or smallest measurement result.

In addition, it should be noted that, if the network device directly sends downlink data to the second terminal device, at least one of a physical downlink shared channel (physical downlink shared channel, PDSCH) that carries the downlink data of the second terminal device and a physical downlink control channel (physical downlink control channel, PDCCH) that schedules the PDSCH may have a same quasi co-location (quasi co-location, QCL) property of a demodulation reference signal (demodulation reference signal, DMRS) antenna port as one or more beam reference signals of the second beam selected by the second terminal device.

In this application, the downlink data of the second terminal device may be service data sent by a base station to the second terminal device, or a downlink feedback that is sent by the base station to the second terminal device and that is for uplink transmission or random access of the second terminal device.

Optionally, the first information may further include at least one of the following:

### Item 1: Quality of a sidelink channel between the first terminal device and the second terminal device

The quality of the sidelink channel herein may be a representation of a measurement result of the sidelink channel measured by the second terminal device. For example, the second terminal device may measure RSRP, RSRQ, or an SINR of the sidelink channel.

### Item 2: Quality of a downlink channel between the second terminal device and the network device

The quality of the downlink channel between the second terminal device and the network device may be a representation of a measurement result of the downlink channel measured by the second terminal device. For example, the second terminal device may measure RSRP, RSRQ, or an SINR of the downlink channel.

### Item 3: Third information of the second terminal device

The third information herein may indicate that the second terminal device expects to receive the downlink data sent by the network device, or may indicate that the second terminal device expects to receive the downlink data forwarded by the first terminal device. For example, if the second terminal device expects to communicate with the network device, the third information may indicate that the second terminal device expects to receive the downlink data sent by the network device. If the second terminal device does not expect to communicate with the network device, the third information may indicate that the second terminal device expects to receive the downlink data forwarded by the first terminal device.

The first information may be carried on a physical sidelink control channel (physical sidelink control channel, PSCCH) or a physical sidelink shared channel (physical sidelink shared channel, PSSCH). The first information may be sent in a form of sideline control information (sidelink control information, SCI), or may be sent in a form of a media access control (media access control, MAC) control element (control element, CE), or may be sent in a form of a radio resource control (radio resource control, RRC) message.

Step 302: The first terminal device sends identification information of the second terminal device to the network device, or the first terminal device sends identification information and the first information to the network device.

If the first terminal device is to forward the downlink data from the network device for the second terminal device, the first terminal device may send the identification information of the second terminal device to the network device, or the first terminal device may send uplink data of the second terminal device to the network device, where the uplink data may include the identification information of the second terminal device. If the network device is to send the downlink data to the second terminal device, the first terminal device may send the identification information of the second terminal device and the first information to the network device, or the first terminal device may send uplink data of the second terminal device and the first information to the network device, where the uplink data may include the identification information of the second terminal device. The identification information of the second terminal device herein may be sent by the second terminal device to the first terminal device. For example, when sending a random access request or the uplink data to the first terminal device, the second terminal device may send the identification information of the second terminal device to the first terminal device.

In addition, it should be noted that the first terminal device may send the identification information of the second terminal device and the first information to the network device in the following two manners.

Manner 1: The first terminal device sends the identification information of the second terminal device and the first information to the network device.

The first information may include an identifier that is reported by the second terminal device and that is of the beam reference signal of the selected second beam. Optionally, the first information may further include the measurement result of the beam reference signal of the second beam selected by the second terminal device. The first terminal device may send the identification information and the first information to the network device on a physical uplink control channel (physical uplink control channel, PUCCH) or a physical uplink shared channel (physical uplink shared channel, PUSCH). For example, the first terminal device may send the first information and the uplink data of the second terminal device to the network device, where the uplink data may carry the identification information of the second terminal device.

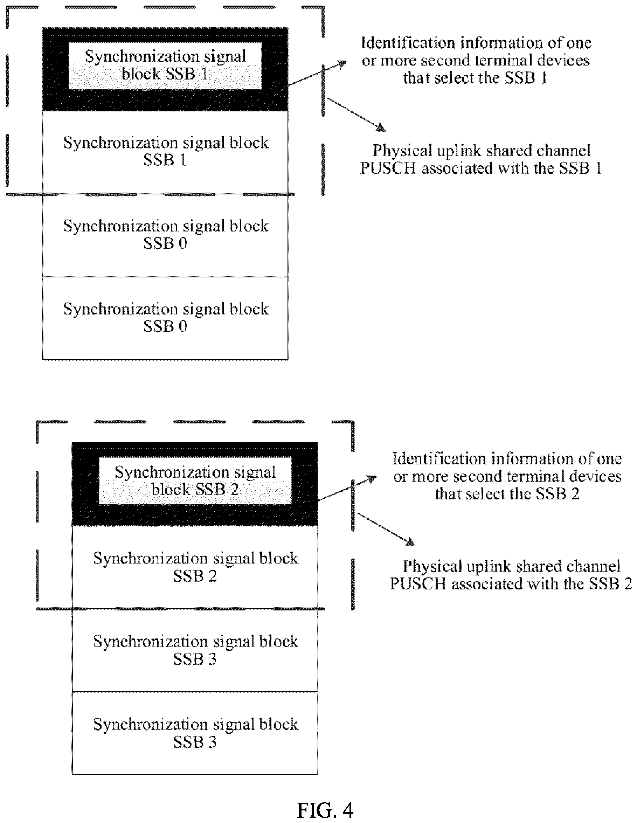

Manner 2: The first terminal device sends the identification information to the network device on a time-frequency resource associated with the second beam selected by the second terminal device. For example, the first terminal device may send the uplink data of the second terminal device to the network device on the time-frequency resource associated with the second beam, where the uplink data includes the identification information of the second terminal device.
(1) The first terminal device may send the identification information of the second terminal device and the first information to the network device through two-step random access. As shown in FIG. 4, a part of second terminal devices select an SSB 1, and the other part of second terminal devices select an SSB 2. Therefore, when performing random access by using physical random access channels (physical random access channels, PRACHs) and preambles (preambles) that are associated with the SSB 1, the first terminal device may send, to the network device on PUCCHs or PUSCHs that are associated with the PRACHs and the preambles, identification information of one or more second terminal devices that select the SSB 1. One PRACH and one preamble may be selected from the PRACHs and the preambles that are associated with the SSB 1, and the identification information of the second terminal device is sent on a PUCCH or a PUSCH that is associated with the PRACH and the preamble. When performing random access by using PRACHs and preambles that are associated with the SSB 2, the first terminal device may send, to the network device on PUCCHs or PUSCHs that are associated with the PRACHs and the preambles, identification information of one or more second terminal devices that select the SSB 2. One PRACH and one preamble may be selected from the PRACHs and the preambles that are associated with the SSB 2, and the identification information of the second terminal device is sent on a PUCCH or a PUSCH that is associated with the PRACH and the preamble.
(2) The first terminal device may send the identification information of the second terminal device and the first information to the network device through four-step random access. As shown in FIG. 4, a part of second terminal devices select an SSB 1, and the other part of second terminal devices select an SSB 2. Therefore, the first terminal device may perform random access by using PRACHs and preambles that are associated with the SSB 1. The first terminal device may send, to the network device on a time-frequency resource that is used for scheduling for the first terminal device and that is in a random access response fed back by the network device, identification information of one or more second terminal devices that select the SSB 1. The first terminal device may perform random access by using PRACHs and preambles that are associated with the SSB 2. The first terminal device may send, to the network device on a time-frequency resource that is used for scheduling for the first terminal device and that is in a random access response fed back by the network device, identification information of one or more second terminal devices that select the SSB 2.
(2) The first terminal device may send the identification information of the second terminal device and the first information to the network device through preconfigured grant transmission. As shown in FIG. 4, a part of second terminal devices select an SSB 1, and the other part of second terminal devices select an SSB 2. The first terminal device may send, to the network device by using PUSCHs and DMRSs that are associated with the SSB 1, identification information of one or more second terminal devices that select the SSB 1. One PUSCH and one DMRS may be selected from the PUSCHs and the DMRSs that are associated with the SSB 1. The first terminal device may send, to the network device by using PUSCHs and DMRSs that are associated with the SSB 2, identification information of one or more second terminal devices that select the SSB 2. One PUSCH and one DMRS may be selected from the PUSCHs and the DMRSs that are associated with the SSB 2. The preconfigured grant transmission means that the network device preconfigures, for a terminal device, a time-frequency resource that can be used for uplink transmission. When the terminal device needs to perform uplink transmission, the terminal device uses the time-frequency resource, and may perform uplink transmission without using a dynamic grant of the network device.

It should be understood that the identification information of the second terminal device may be a unique identifier of the second terminal device, for example, an international mobile equipment identity (international mobile equipment identity, IMEI), a radio network temporary identifier (RNTI), or a temporary mobile subscriber identity (TMSI). Alternatively, the identification information may be identification information of the second terminal device in the cluster. After receiving the identification information of the second terminal device, the network device may determine the time-frequency resource for receiving the identification information of the second terminal device, to further determine the second beam selected by the second terminal device. Based on the foregoing solution, the first terminal device may send the identification information of the second terminal device to the network device on the time-frequency resource associated with the second beam, to save transmission resources.

Step 303: The network device sends the downlink data of the second terminal device to the second terminal device by using the second beam selected by the second terminal device; or the network device sends the downlink data of the second terminal device to the first terminal device by using a first beam selected by the first terminal device.

If the downlink data of the second terminal device is to be forwarded by the first terminal device, the network device may send the downlink data of the second terminal device to the first terminal device by using the first beam selected by the first terminal device. The downlink data herein may include the identification information of the second terminal device. The first terminal device may send the downlink data to the corresponding second terminal device.

If the downlink data of the second terminal device is to be sent by the network device, the network device sends the downlink data of the second terminal device to the second terminal device by using the second beam selected by the second terminal device.

The foregoing describes the communication method in this embodiment of this application, and the following describes communication apparatuses in this embodiment of this application. The method and the apparatus are based on a same technical concept. The method and the apparatus have similar principles for resolving problems. Therefore, for implementations of the apparatus and the method, refer to each other. Details are not repeated.

In this embodiment of this application, the cluster head node (for example, the first terminal device), the cluster member node (for example, the second terminal device), or the network device may determine a communication mode between the cluster member node and the network device. To be specific, the cluster head node, the cluster member node, or the network device may determine whether the cluster member node is to receive the downlink data sent by the network device or receive downlink data forwarded by the cluster head node. The following separately describes the foregoing three cases.

Embodiment 1: The cluster head node determines the communication mode between the cluster member node and the network device.

The first terminal device may determine, based on second information, whether to forward the downlink data from the network device for the second terminal device. The second information herein is information required for determining whether the first terminal device is to forward the downlink data of the second terminal device that is from the network device, and may include at least one of the following:

### Item 1: Quality of the sidelink channel between the first terminal device and the second terminal device

The quality of the sidelink channel herein may be a representation of a measurement result of the sidelink channel that is between the first terminal device and the second terminal device and that is measured by the first terminal device, or may be a representation of a measurement result of the sidelink channel that is between the first terminal device and the second terminal device and that is measured by the second terminal device, where the measurement result is sent by the second terminal device. The measurement result may be at least one of RSRP, RSRQ, or an SINR.

For example, if the quality of the sidelink channel between the first terminal device and the second terminal device is greater than or equal to a first threshold, the first terminal device may determine to forward the downlink data from the network device for the second terminal device. Alternatively, if the quality of the sidelink channel between the first terminal device and the second terminal device is less than or equal to a second threshold, the first terminal device may determine not to forward the downlink data from the network device for the second terminal device. The first threshold and the second threshold herein may be determined based on empirical values, or may be preset. The first threshold and the second threshold may be the same or different. This is not specifically limited in this application.

### Item 2: Quality of a downlink channel between the first terminal device and the network device

The quality of the downlink channel herein may be represented by a measurement result of the downlink channel that is between the first terminal device and the network device and that is measured by the first terminal device. The measurement result may be at least one of RSRP, RSRQ, or an SINR.

For example, if the quality of the downlink channel between the first terminal device and the network device is greater than or equal to the first threshold, the first terminal device may determine to forward the downlink data from the network device for the second terminal device. Alternatively, if the quality of the sidelink channel between the first terminal device and the second terminal device is less than or equal to the second threshold, the first terminal device may determine not to forward the downlink data from the network device for the second terminal device. The first threshold and the second threshold herein may be determined based on empirical values. The first threshold and the second threshold may be the same or different. This is not specifically limited in this application.

In an embodiment, the first terminal device may determine, based on the item 1 and the item 2, whether the first terminal device is to forward the downlink data from the network device. For example, if the quality of the sidelink channel between the first terminal device and the second terminal device is greater than or equal to the first threshold, and the quality of the downlink channel between the first terminal device and the network device is greater than or equal to the first threshold, the first terminal device may determine that the first terminal device is to forward the downlink data of the second terminal device that is from the network device.

Alternatively, if the quality of the sidelink channel between the first terminal device and the second terminal device is less than or equal to the second threshold, and the quality of the downlink channel between the first terminal device and the network device is greater than or equal to the first threshold, the first terminal device may determine not to forward the downlink data of the second terminal device that is from the network device, or the first terminal device may determine to forward the downlink data of the second terminal device that is from the network device.

Alternatively, if the quality of the sidelink channel between the first terminal device and the second terminal device is greater than or equal to the first threshold, and the quality of the downlink channel between the first terminal device and the network device is less than or equal to the second threshold, the first terminal device may determine to forward the downlink data of the second terminal device that is from the network device, or the first terminal device may determine not to forward the downlink data of the second terminal device that is from the network device.

Alternatively, if the quality of the sidelink channel between the first terminal device and the second terminal device is less than or equal to the second threshold, and the quality of the downlink channel between the first terminal device and the network device is less than or equal to the second threshold, the first terminal device may determine not to forward the downlink data of the second terminal device that is from the network device.

### Item 3: Quality of the downlink channel between the second terminal device and the network device

The quality of the downlink channel herein may be a representation of a measurement result of the downlink channel that is between the second terminal device and the network device and that is measured by the second terminal device, where the measurement result is sent by the second terminal device. The measurement result may be at least one of RSRP, RSRQ, or an SINR.

For example, if the quality of the downlink channel between the second terminal device and the network device is greater than or equal to the first threshold, the first terminal device may determine not to forward the downlink data from the network device for the second terminal device. If the quality of the downlink channel between the second terminal device and the network device is less than or equal to the second threshold, the first terminal device may determine to forward the downlink data from the network device for the second terminal device. The first threshold and the second threshold herein may be determined based on empirical values. The first threshold and the second threshold may be the same or different. This is not specifically limited in this application.

In an embodiment, the first terminal device may determine, based on at least one of the item 1, the item 2, and the item 3, whether to forward the downlink data from the network device for the second terminal device.

For example, the first terminal device may determine, based on the item 1 and the item 3, whether to forward the downlink data from the network device for the second terminal device. For example, if the quality of the sidelink channel between the first terminal device and the second terminal device is greater than or equal to the first threshold, and the quality of the downlink channel between the second terminal device and the network device is less than or equal to the second threshold, the first terminal device may determine to forward the downlink data from the network device for the second terminal device. Alternatively, if the quality of the sidelink channel between the first terminal device and the second terminal device is less than or equal to the second threshold, and the quality of the downlink channel between the second terminal device and the network device is greater than or equal to the first threshold, the first terminal device may determine not to forward the downlink data from the network device for the second terminal device. Alternatively, if the quality of the sidelink channel between the first terminal device and the second terminal device is greater than or equal to the first threshold, and the quality of the downlink channel between the second terminal device and the network device is greater than or equal to the first threshold, the first terminal device may determine to forward the downlink data from the network device for the second terminal device, or may determine not to forward the downlink data from the network device for the second terminal device. Alternatively, if the quality of the sidelink channel between the first terminal device and the second terminal device is less than or equal to the second threshold, and the quality of the downlink channel between the second terminal device and the network device is less than or equal to the second threshold, the first terminal device may determine to forward the downlink data from the network device for the second terminal device, or may determine not to forward the downlink data from the network device for the second terminal device.

Alternatively, the first terminal device may determine, based on the item 2 and the item 3, whether to forward the downlink data from the network device for the second terminal device. For example, if the quality of the downlink channel between the first terminal device and the network device is greater than or equal to the first threshold, and the quality of the downlink channel between the second terminal device and the network device is less than or equal to the second threshold, the first terminal device may determine to forward the downlink data from the network device for the second terminal device. Alternatively, if the quality of the downlink channel between the first terminal device and the network device is less than or equal to the second threshold, and the quality of the downlink channel between the second terminal device and the network device is greater than or equal to the second threshold, the first terminal device may determine not to forward the downlink data from the network device for the second terminal device. Alternatively, if the quality of the downlink channel between the first terminal device and the network device is greater than or equal to the second threshold, and the quality of the downlink channel between the second terminal device and the network device is greater than or equal to the second threshold, the first terminal device may determine to forward the downlink data from the network device for the second terminal device, or may determine not to forward the downlink data from the network device for the second terminal device. Alternatively, if the quality of the downlink channel between the first terminal device and the network device is less than or equal to the second threshold, and the quality of the downlink channel between the second terminal device and the network device is less than or equal to the second threshold, the first terminal device may determine to forward the downlink data from the network device for the second terminal device, or may determine not to forward the downlink data from the network device for the second terminal device.

The first terminal device may determine, based on the item 1, the item 2, and the item 3, whether to forward the downlink data from the network device for the second terminal device. For example, if the quality of the sidelink channel between the first terminal device and the second terminal device is greater than or equal to the first threshold, the quality of the downlink channel between the first terminal device and the network device is greater than or equal to the first threshold, and the quality of the downlink channel between the second terminal device and the network device is less than or equal to the second threshold, the first terminal device may determine to forward the downlink data from the network device for the second terminal device. For another example, if the quality of the sidelink channel between the first terminal device and the second terminal device is less than or equal to the second threshold, the quality of the downlink channel between the first terminal device and the network device is less than or equal to the second threshold, and the quality of the downlink channel between the second terminal device and the network device is greater than or equal to the first threshold, the first terminal device may determine not to forward the downlink data from the network device for the second terminal device.

### Item 4: Load information of the first terminal device

The load information of the first terminal device herein may refer to a quantity of second terminal devices for which the first terminal device needs to forward the downlink data from the network device. If load of the first terminal device is greater than or equal to the first threshold, the first terminal device may determine not to forward the downlink data from the network device for the second terminal device. If load of the first terminal device is less than or equal to the second threshold, the first terminal device may determine to forward the downlink data from the network device for the second terminal device. The first threshold and the second threshold herein may be determined based on empirical values. The first threshold and the second threshold may be the same or different. This is not specifically limited in this application.

In an embodiment, the first terminal device may determine, based on at least one of the item 1 to the item 4, whether to forward the downlink data from the network device for the second terminal device. For example, the first terminal device may determine, based on the quality of the sidelink channel between the first terminal device and the second terminal device and the load information of the first terminal device, whether to forward the downlink data from the network device for the second terminal device. If the quality of the sidelink channel between the first terminal device and the second terminal device is greater than or equal to the first threshold, and the load of the first terminal device is less than or equal to the second threshold, the first terminal device may determine to forward the downlink data from the network device for the second terminal device. Alternatively, if the quality of the sidelink channel between the first terminal device and the second terminal device is less than or equal to the second threshold, and the load of the first terminal device is greater than or equal to the first threshold, the first terminal device may determine not to forward the downlink data from the network device for the second terminal device. If the quality of the sidelink channel between the first terminal device and the second terminal device is greater than or equal to the first threshold, and the load of the first terminal device is greater than or equal to the first threshold, the first terminal device may determine to forward the downlink data from the network device for the second terminal device, or may determine not to forward the downlink data from the network device for the second terminal device. If the quality of the sidelink channel between the first terminal device and the second terminal device is less than or equal to the second threshold, and the load of the first terminal device is less than or equal to the second threshold, the first terminal device may determine to forward the downlink data from the network device for the second terminal device, or may determine not to forward the downlink data from the network device for the second terminal device.

The first terminal device may determine, based on the item 2 and the item 4, whether to forward the downlink data from the network device for the second terminal device. For example, if the quality of the downlink channel between the first terminal device and the network device is greater than or equal to the first threshold, and the load of the first terminal device is less than or equal to the second threshold, the first terminal device may determine to forward the downlink data from the network device for the second terminal device. If the quality of the downlink channel between the first terminal device and the network device is less than or equal to the second threshold, and the load of the first terminal device is greater than or equal to the first threshold, the first terminal device may determine not to forward the downlink data from the network device for the second terminal device. If the quality of the downlink channel between the first terminal device and the network device is greater than or equal to the first threshold, and the load of the first terminal device is greater than or equal to the first threshold, the first terminal device may determine to forward the downlink data from the network device for the second terminal device, or may determine not to forward the downlink data from the network device for the second terminal device. If the quality of the downlink channel between the first terminal device and the network device is less than or equal to the second threshold, and the load of the first terminal device is less than or equal to the second threshold, the first terminal device may determine to forward the downlink data from the network device for the second terminal device, or may determine not to forward the downlink data from the network device for the second terminal device.

The first terminal device may determine, based on the item 3 and the item 4, whether to forward the downlink data from the network device for the second terminal device. For example, if the quality of the downlink channel between the second terminal device and the network device is less than or equal to the second threshold, and the load of the first terminal device is less than or equal to the second threshold, the first terminal device may determine to forward the downlink data from the network device for the second terminal device. If the quality of the downlink channel between the second terminal device and the network device is greater than or equal to the second threshold, and the load of the first terminal device is greater than or equal to the first threshold, the first terminal device may determine not to forward the downlink data from the network device for the second terminal device. For another example, if the quality of the downlink channel between the second terminal device and the network device is greater than or equal to the first threshold, and the load of the first terminal device is less than or equal to the second threshold, the first terminal device may determine to forward the downlink data from the network device for the second terminal device, or may determine not to forward the downlink data from the network device for the second terminal device. For another example, if the quality of the downlink channel between the second terminal device and the network device is less than or equal to the second threshold, and the load of the first terminal device is greater than or equal to the first threshold, the first terminal device may determine to forward the downlink data from the network device for the second terminal device, or may determine not to forward the downlink data from the network device for the second terminal device.

Alternatively, the first terminal device may determine, based on the item 1, the item 2, and the item 4, whether to forward the downlink data from the network device for the second terminal device. For example, if the quality of the sidelink channel between the first terminal device and the second terminal device is greater than or equal to the first threshold, the quality of the downlink channel between the first terminal device and the network device is greater than or equal to the first threshold, and the load of the first terminal device is less than or equal to the second threshold, the first terminal device may determine to forward the downlink data from the network device for the second terminal device. For another example, if the quality of the sidelink channel between the first terminal device and the second terminal device is less than or equal to the second threshold, the quality of the downlink channel between the first terminal device and the network device is less than or equal to the second threshold, and the load of the first terminal device is greater than or equal to the first threshold, the first terminal device may determine not to forward the downlink data from the network device for the second terminal device.

Alternatively, the first terminal device may determine, based on the item 1, the item 3, and the item 4, whether to forward the downlink data from the network device for the second terminal device. For example, if the quality of the sidelink channel between the first terminal device and the second terminal device is greater than or equal to the first threshold, the quality of the downlink channel between the second terminal device and the network device is less than or equal to the second threshold, and the load of the first terminal device is less than or equal to the second threshold, the first terminal device may determine to forward the downlink data from the network device for the second terminal device. For another example, if the quality of the sidelink channel between the first terminal device and the second terminal device is less than or equal to the first threshold, the quality of the downlink channel between the second terminal device and the network device is greater than or equal to the first threshold, and the load of the first terminal device is greater than or equal to the first threshold, the first terminal device may determine not to forward the downlink data from the network device for the second terminal device.

Alternatively, the first terminal device may determine, based on the item 2, the item 3, and the item 4, whether to forward the downlink data from the network device for the second terminal device. For example, if the quality of the downlink channel between the first terminal device and the network device is greater than or equal to the first threshold, the quality of the downlink channel between the second terminal device and the network device is less than or equal to the second threshold, and the load of the first terminal device is less than or equal to the second threshold, the first terminal device may determine to forward the downlink data from the network device for the second terminal device. For another example, if the quality of the downlink channel between the first terminal device and the network device is less than or equal to the second threshold, the quality of the downlink channel between the second terminal device and the network device is greater than or equal to the first threshold, and the load of the first terminal device is greater than or equal to the first threshold, the first terminal device may determine not to forward the downlink data from the network device for the second terminal device.

Alternatively, the first terminal device may determine, based on the item 1, the item 2, the item 3, and the item 4, whether to forward the downlink data from the network device for the second terminal device. For example, if the quality of the sidelink channel between the first terminal device and the second terminal device is greater than or equal to the first threshold, the quality of the downlink channel between the first terminal device and the network device is greater than or equal to the first threshold, the quality of the downlink channel between the second terminal device and the network device is less than or equal to the second threshold, and the load of the first terminal device is less than or equal to the second threshold, the first terminal device may determine to forward the downlink data from the network device for the second terminal device.

### Item 5: Third information

The third information herein may indicate that the second terminal device expects to receive the downlink data sent by the network device, or may indicate that the second terminal device expects to receive the downlink data forwarded by the first terminal device. For example, if the third information indicates that the second terminal device expects to receive the downlink data sent by the network device, the first terminal device may determine not to forward the downlink data from the network device for the second terminal device. If the third information indicates that the second terminal device expects to receive the downlink data forwarded by the first terminal device, the first terminal device may determine to forward the downlink data from the network device for the second terminal device.

In an embodiment, the first terminal device may determine, based on at least one of the item 1 to the item 5, whether to forward the downlink data from the network device for the second terminal device. For example, the first terminal device may determine, based on the item 1 and the item 5, the item 2 and the item 5, the item 3 and the item 5, or the item 4 and the item 5, whether to forward the downlink data from the network device for the second terminal device. Alternatively, the first terminal device may determine, based on the item 1, the item 2, and the item 5, or the item 1, the item 2, the item 3, and the item 5, or the item 1, the item 2, the item 3, the item 4, and the item 5, whether to forward the downlink data from the network device for the second terminal device. For example, if the quality of the sidelink channel between the first terminal device and the second terminal device is greater than or equal to the first threshold, the quality of the downlink channel between the first terminal device and the network device is greater than or equal to the first threshold, the quality of the downlink channel between the second terminal device and the network device is less than or equal to the second threshold, the load of the first terminal device is less than or equal to the second threshold, and the third information indicates that the second terminal device expects to receive the downlink data forwarded by the first terminal device, the second terminal device may determine to forward the downlink data from the network device for the second terminal device.

In another embodiment, if the first terminal device receives the information about the second beam selected by the second terminal device, or any one of the item 1 to the item 5, the first terminal device may consider by default that the first terminal device is to forward the downlink data from the network device for the second terminal device.

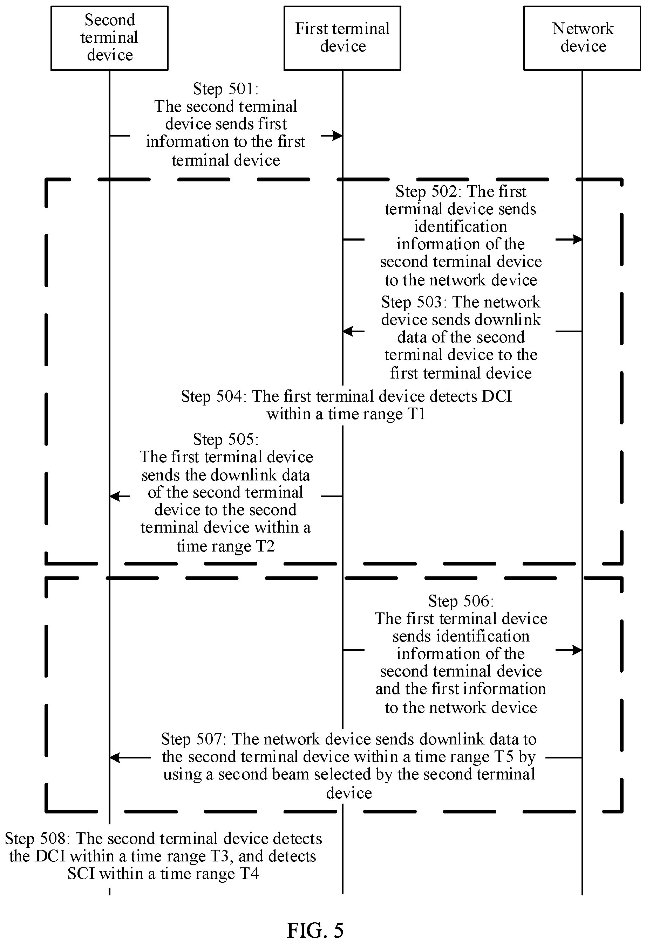

FIG. 5 is an example flowchart of a communication method according to an embodiment of this application from a perspective of device interaction. The method may include the following steps.

Step 501: A second terminal device sends first information to a first terminal device.

The second terminal device may send the first information to the first terminal device based on measurement results of beam reference signals of beams of a network device. Optionally, the second terminal device may further send uplink data to the first terminal device.

For descriptions of the first information, refer to related descriptions shown in FIG. 3. Details are not described herein again.

Step 502: The first terminal device sends identification information of the second terminal device to the network device.

Optionally, the first terminal device may send the uplink data of the second terminal device to the network device.

In this case, the first terminal device determines to forward downlink data from the network device for the second terminal device. Therefore, the first terminal device may send the identification information of the second terminal device to the network device on an uplink resource corresponding to a first beam selected by the first terminal device.

Optionally, the first terminal device may send the uplink data of the second terminal device to the network device on the uplink resource corresponding to the first beam selected by the first terminal device.

Step 503: The network device sends the downlink data of the second terminal device to the first terminal device.

The downlink data herein may include the identification information of the second terminal device or indication information of the identification information. The first terminal device may determine, based on the identification information or the indication information that is included in the downlink data, a terminal device to which the downlink data belongs. The network device may send the downlink data of the second terminal device to the first terminal device by using the first beam selected by the first terminal device.

Step 504: The first terminal device detects DCI within a time range T1.

The time range T1 herein may be predefined in a protocol, or may be preset. This is not specifically limited in this application. When detecting the DCI, the first terminal device may search in a detection window based on identification information of the first terminal device and/or cluster identification information. The DCI herein is for scheduling a PDSCH carrying the downlink data of the second terminal device.

Step 505: The first terminal device sends the downlink data of the second terminal device to the second terminal device within a time range T2.

The time range T2 herein may be predefined in a protocol, or may be preset. This is not specifically limited in this application. The first terminal device may include the downlink data in a PSSCH or a PSCCH.

Step 502 to step 505 are an example flowchart in which the first terminal device determines to forward the downlink data from the network device for the second terminal device.

The following step 506 and step 507 are an example flowchart in which the first terminal device determines not to forward downlink data from the network device for the second terminal device.

Step 506: The first terminal device sends identification information of the second terminal device and the first information to the network device.

Optionally, the first terminal device may send the uplink data of the second terminal device to the network device.

The first terminal device may include the identification information and the first information in a PUSCH or a PUCCH. Alternatively, the first terminal device may send the identification information to the network device on a time-frequency resource that is in the first information and that is associated with a second beam selected by the second terminal device.

Step 507: The network device sends the downlink data to the second terminal device within a time range T3 by using the second beam selected by the second terminal device.

Optionally, the network device may include the identification information of the second terminal device in the downlink data. For example, the identification information may be carried in a header of a data packet of the downlink data.

The time range T3 herein may be predefined in a protocol, or may be preset. This is not specifically limited in this application.

Step 508: The second terminal device detects the DCI within the time range T3, and detects SCI within the time range T2.

Because the second terminal device does not know whether the first terminal device is to forward the downlink data from the network device or the network device is to send the downlink data, the second terminal device needs to detect the DCI and the SCI, to receive the downlink data. The second terminal device may detect the DCI and the SCI in the detection window based on the identification information of the second terminal device and/or the cluster identification information. The DCI is for scheduling the PDSCH carrying the downlink data, and the SCI is for scheduling the PSSCH carrying the downlink data.

In addition, it should be noted that the first terminal device may send second indication information to the second terminal device. The second indication information herein may indicate that the downlink data of the second terminal device is to be sent by the network device, or the second indication information may indicate that the downlink data of the second terminal device may be forwarded by the first terminal device. If the first terminal device determines to forward the downlink data from the network device for the second terminal device, the second indication information indicates that the downlink data of the second terminal device is to be forwarded by the first terminal device. If the first terminal device determines not to forward the downlink data from the network device for the second terminal device, the second indication information indicates that the downlink data of the second terminal device is to be sent by the network device.

If the second indication information indicates that the downlink data of the second terminal device is to be forwarded by the first terminal device, the second terminal device may detect the sidelink control information (sidelink control information, SCI) within a predefined or preconfigured time range. The SCI is for scheduling the physical sidelink shared channel (physical sidelink shared channel, PSSCH) carrying the downlink data. If the second indication information indicates that the downlink data of the second terminal device is to be sent by the network device, the second terminal device may detect, within a predefined or preconfigured time range, the DCI including the cluster identification information or the identification information of the second terminal device. The DCI is applicable to scheduling the PDSCH carrying the downlink data.

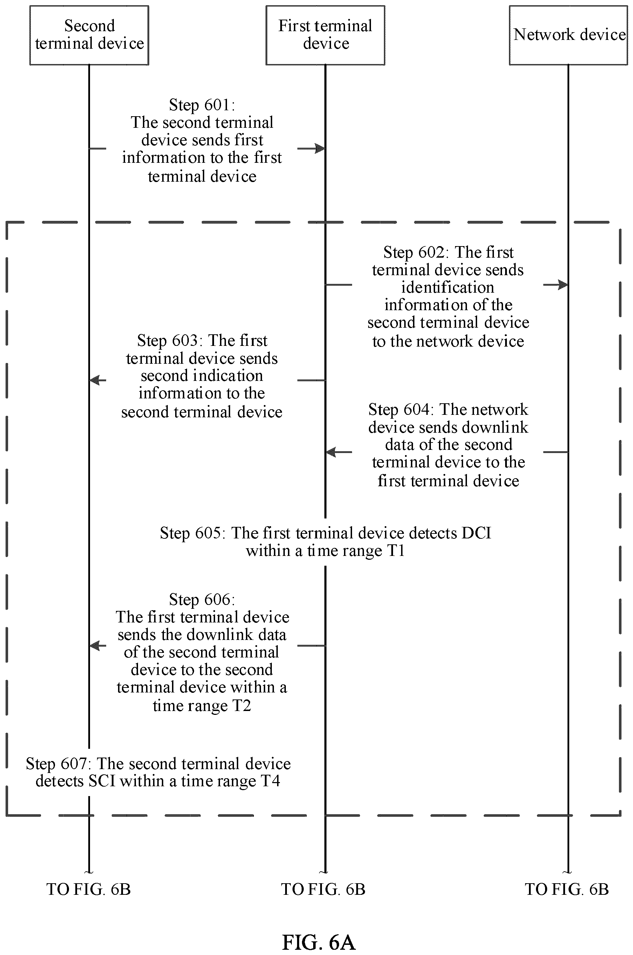

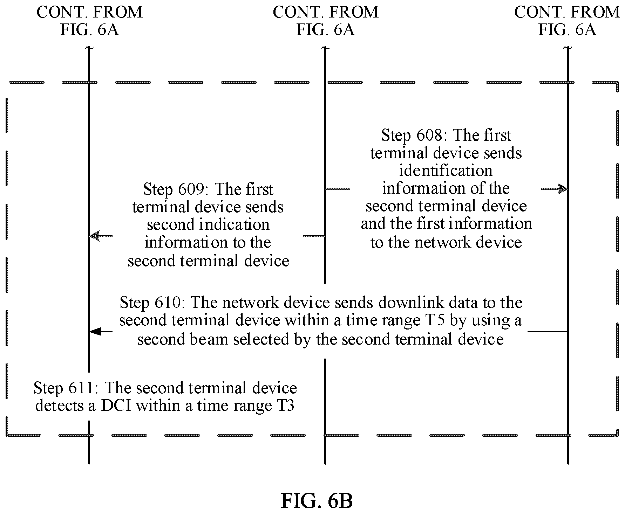

FIG. 6A and FIG. 6B are an example flowchart of a communication method according to an embodiment of this application from a perspective of device interaction. The method may include the following steps.

Step 601 and step 602 may be the same as step 501 and step 502 shown in FIG. 5.

Step 603: The first terminal device sends second indication information to the second terminal device.

The second indication information herein may indicate that the downlink data of the second terminal device is to be forwarded by the first terminal device. An execution sequence of step 602 and step 603 is not limited to the sequence shown in FIG. 6A. For example, step 602 and step 603 may be performed simultaneously, or step 603 may be performed before step 602. This is not specifically limited in this application.

Step 604 to step 606 may be the same as step 503 to step 505 shown in FIG. 5.

Step 607: The second terminal device detects SCI within the time range T2.

The time range T2 herein may be predefined in a protocol, or may be preset. This is not specifically limited in this application. The second terminal device may search for the SCI in the detection window based on the identification information of the second terminal device and/or cluster identification information. The SCI is for scheduling a PSSCH carrying the downlink data.

Step 602 to step 607 are an example flowchart in which the first terminal device determines to forward the downlink data from the network device for the second terminal device, and sends the second indication information to the second terminal device.

The following step 608 to step 610 are an example flowchart in which the first terminal device determines not to forward downlink data from the network device for the second terminal device, and sends second indication information to the second terminal device.

Step 608: The first terminal device sends identification information of the second terminal device and the first information to the network device.

The first terminal device may include the identification information and the first information in a PUSCH or a PUCCH. Alternatively, the first terminal device may send the identification information to the network device on a time-frequency resource that is in the first information and that is associated with a second beam selected by the second terminal device.

Step 609: The first terminal device sends the second indication information to the second terminal device.

The second indication information herein may indicate that the downlink data of the second terminal device is to be sent by the network device. It should be understood that an execution sequence of step 608 and step 609 is not limited to the sequence shown in FIG. 6B. Step 608 and step 609 may be performed simultaneously, or step 609 may be performed before step 608.

Step 610: The network device sends the downlink data to the second terminal device within a time range T3 by using the second beam selected by the second terminal device.

The time range T3 herein may be predefined in a protocol, or may be preset. This is not specifically limited in this application.

Step 611: The second terminal device detects DCI within the time range T3.

The second terminal device may search for the DCI in a detection window based on the identification information of the second terminal device and/or cluster identification information. The DCI is for scheduling a PDSCH carrying the downlink data.

Embodiment 2: The second terminal device determines whether the first terminal device is to forward the downlink data from the network device.

The second terminal device may determine, based on second information, whether the first terminal device is to forward the downlink data from the network device. The second information herein may include the item 1 to the item 4 described in case 1. The second terminal device may determine, based on any one or more of the item 1 to the item 4, whether the downlink data is to be forwarded by the first terminal device.

For example, if the quality of the sidelink channel between the first terminal device and the second terminal device is greater than or equal to the first threshold, the second terminal device may determine that the downlink data is to be forwarded by the first terminal device. Alternatively, if the quality of the sidelink channel between the first terminal device and the second terminal device is less than or equal to the second threshold, the second terminal device may determine that the downlink data is to be sent by the network device. The first threshold and the second threshold herein may be determined based on empirical values. The first threshold and the second threshold may be the same or different. This is not specifically limited in this application.

For another example, if the quality of the downlink channel between the second terminal device and the network device is greater than or equal to the first threshold, the second terminal device may determine that the downlink data is to be sent by the network device. If the quality of the downlink channel between the second terminal device and the network device is less than or equal to the second threshold, the second terminal device may determine that the downlink data is to be forwarded by the first terminal device. The first threshold and the second threshold herein may be determined based on empirical values. The first threshold and the second threshold may be the same or different. This is not specifically limited in this application.

For another example, if the quality of the sidelink channel between the first terminal device and the second terminal device is greater than or equal to the first threshold, and the quality of the downlink channel between the second terminal device and the network device is less than or equal to the second threshold, the second terminal device may determine that the downlink data is to be forwarded by the first terminal device. Alternatively, if the quality of the sidelink channel between the first terminal device and the second terminal device is less than or equal to the second threshold, and the quality of the downlink channel between the second terminal device and the network device is greater than or equal to the first threshold, the second terminal device may determine that the downlink data is to be sent by the network device. Alternatively, if the quality of the sidelink channel between the first terminal device and the second terminal device is greater than or equal to the first threshold, and the quality of the downlink channel between the second terminal device and the network device is greater than or equal to the first threshold, the first terminal device may determine that the downlink data is to be sent by the network device or forwarded by the first terminal device. Alternatively, if the quality of the sidelink channel between the first terminal device and the second terminal device is less than or equal to a second threshold, and the quality of the downlink channel between the second terminal device and the network device is less than or equal to the second threshold, the second terminal device may determine that the downlink data is to be sent by the network device or forwarded by the first terminal device.

In this embodiment of this application, the second terminal device may send third information to the first terminal device. The third information may indicate that the second terminal device expects to receive the downlink data sent by the network device, or the third information may indicate that the second terminal device expects to receive the downlink data forwarded by the first terminal device. Alternatively, if the second terminal device does not send third information to the first terminal device, the first terminal device may consider by default that the first terminal device is to forward the downlink data from the network device for the second terminal device. Alternatively, if the second terminal device does not send third information to the first terminal device, the first terminal device may consider by default that the first terminal device is not to forward the downlink data from the network device for the first terminal device. For example, the third information may be carried in the first information.

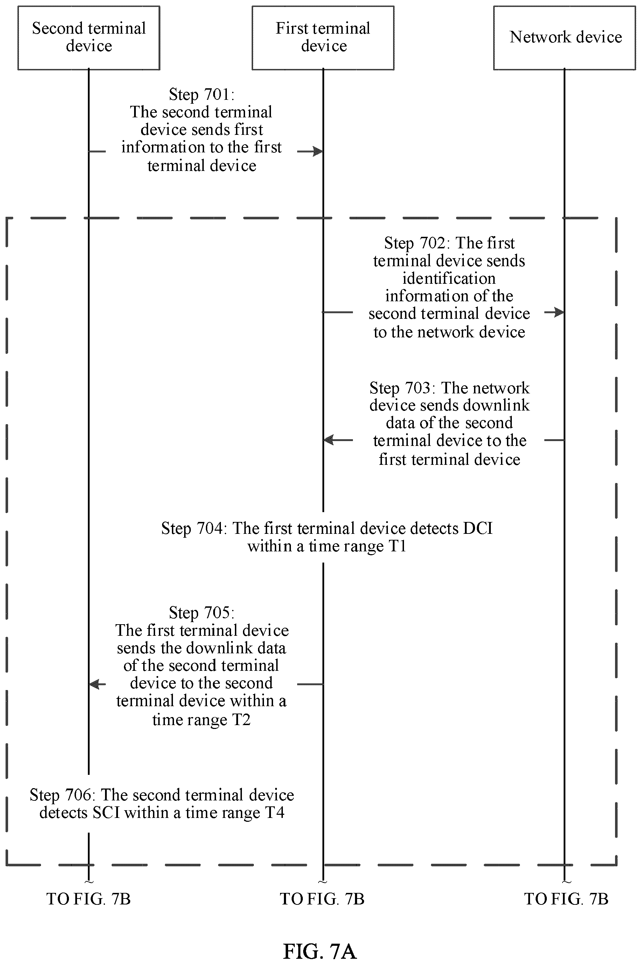

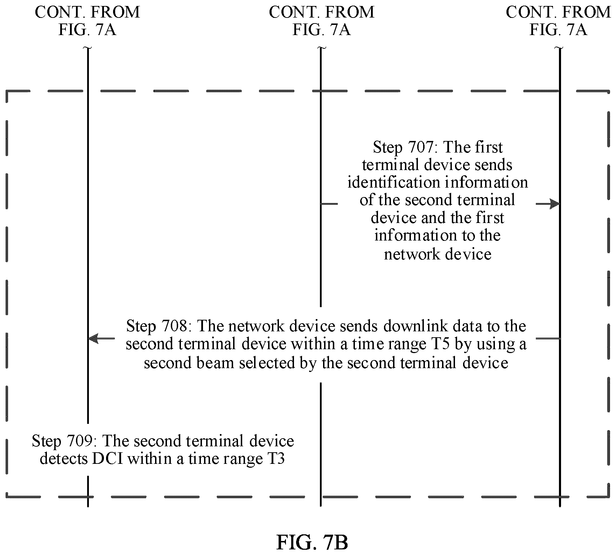

FIG. 7A and FIG. 7B are an example flowchart of a communication method according to an embodiment of this application from a perspective of device interaction. The method may include the following steps.

Step 701: A second terminal device sends first information to a first terminal device.

The second terminal device may send the first information to the first terminal device based on measurement results of beam reference signals of beams of a network device. Optionally, the second terminal device may send uplink data to the first terminal device.

For descriptions of the first information, refer to related descriptions shown in FIG. 3. Details are not described herein again. The second terminal device may determine, based on the measurement results, whether the first terminal device is to forward downlink data from the network device. The following step 702 to step 706 are a procedure of determining that the first terminal device is to forward the downlink data from the network device.

Step 702: The first terminal device sends identification information of the second terminal device to the network device.

Optionally, the first terminal device may send the uplink data of the second terminal device to the network device.

Because the first terminal device does not receive third information that is sent by the second terminal device and that indicates whether the first terminal device is to forward the downlink data from the network device, the first terminal device may consider by default that the second terminal device expects the first terminal device to forward the downlink data from the network device. Alternatively, the first information includes third information, and the third information indicates that the second terminal device expects to receive the downlink data that is from the network device and that is forwarded by the first terminal device. The first terminal device may send the identification information of the second terminal device to the network device by using a first beam selected by the first terminal device.

Step 703: The network device sends the downlink data of the second terminal device to the first terminal device.

The downlink data herein may include the identification information of the second terminal device or indication information of the identification information. The first terminal device may determine, based on the identification information or the indication information that is included in the downlink data, a terminal device to which the downlink data belongs.

Step 704: The first terminal device detects DCI within a time range T1.

The time range T1 herein may be predefined in a protocol, or may be preset. This is not specifically limited in this application. When detecting the DCI, the first terminal device may search in a detection window based on identification information of the first terminal device and/or cluster identification information. The DCI herein is for scheduling a PDSCH carrying the downlink data of the second terminal device.

Step 705: The first terminal device sends the downlink data of the second terminal device to the second terminal device within a time range T2.

The time range T2 herein may be predefined in a protocol, or may be preset. This is not specifically limited in this application. The first terminal device may include the downlink data in a PSSCH or a PSCCH.

Step 706: The second terminal device detects SCI within the time range T2.

The second terminal device may search for the SCI in the detection window based on the identification information of the second terminal device and/or the cluster identification information. The SCI is for scheduling the PSSCH carrying the downlink data.

The following step 707 to step 709 are an example procedure in which the second terminal device determines that the downlink data is to be sent by the network device.

Step 707: The first terminal device sends identification information of the second terminal device and the first information to the network device.

Optionally, the first terminal device may send the uplink data of the second terminal device to the network device.

Because the first terminal device does not receive third information that is sent by the second terminal device and that indicates whether the first terminal device is to forward the downlink data from the network device, the first terminal device may consider by default that the second terminal device expects to receive the downlink data sent by the network device. Alternatively, the first information includes third information, and the third information indicates that the second terminal device expects to receive the downlink data sent by the network device. The first terminal device may include the identification information and the first information in a PUSCH or a PUCCH. Alternatively, the first terminal device may send the identification information to the network device on a time-frequency resource that is in the first information and that is associated with a second beam selected by the second terminal device.

Step 708: The network device sends the downlink data to the second terminal device within a time range T3 by using the second beam selected by the second terminal device.

The time range T3 herein may be predefined in a protocol, or may be preset. This is not specifically limited in this application.

Step 709: The second terminal device detects DCI within the time range T3.

The second terminal device may search for the DCI in a detection window based on the identification information of the second terminal device and/or cluster identification information. The DCI is for scheduling a PDSCH carrying the downlink data.

Embodiment 3: The network device determines whether the first terminal device is to forward the downlink data of the second terminal device.

The network device may receive second information sent by the first terminal device. The second information herein is information required for determining whether the first terminal device is to forward the downlink data of the second terminal device that is from the network device, and may include the item 1 to the item 5 described in case 1. The network device may determine, based on any one or more of the item 1 to the item 5, whether the downlink data of the second terminal device is to be forwarded by the first terminal device.

For example, if the quality of the sidelink channel between the first terminal device and the second terminal device is greater than or equal to the first threshold, the network device may determine that the downlink data of the second terminal device is to be forwarded by the first terminal device. If the quality of the sidelink channel between the first terminal device and the second terminal device is less than or equal to the second threshold, the network device may determine that the downlink data of the second terminal device is not to be forwarded by the first terminal device.

For another example, if the quality of the downlink channel between the first terminal device and the network device is greater than or equal to the first threshold, the network device may determine that the downlink data of the second terminal device is to be forwarded by the first terminal device. If the quality of the downlink channel between the first terminal device and the network device is less than or equal to the second threshold, the downlink data of the second terminal device is not to be forwarded by the first terminal device.

For another example, if the quality of the downlink channel between the second terminal device and the network device is greater than or equal to the first threshold, the network device may determine that the downlink data of the second terminal device is not to be forwarded by the first terminal device. If the quality of the downlink channel between the second terminal device and the network device is less than or equal to the second threshold, the network device may determine that the downlink data of the second terminal device is to be forwarded by the first terminal device.

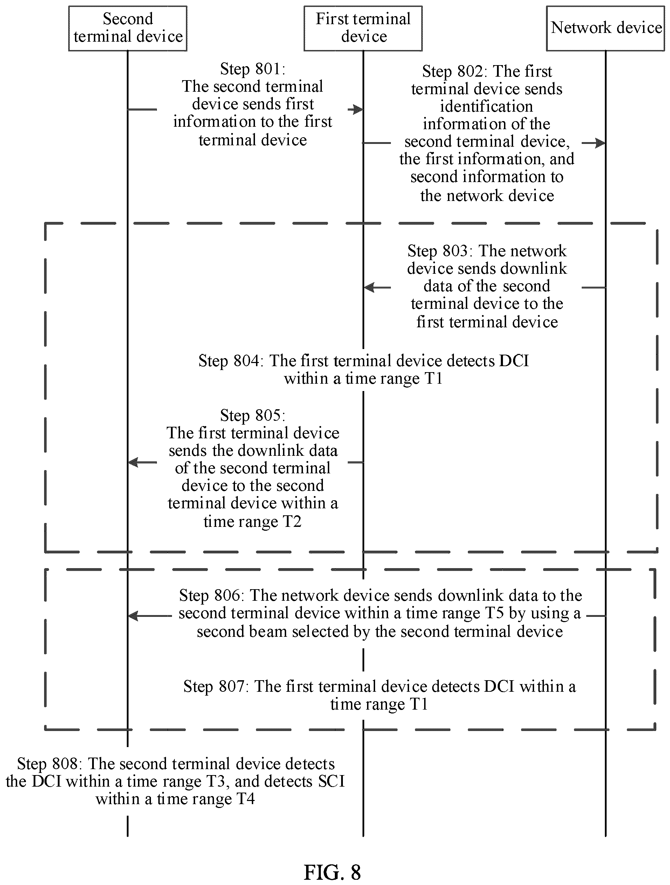

FIG. 8 is an example flowchart of a communication method according to an embodiment of this application from a perspective of device interaction. The method may include the following steps.

Step 801: A second terminal device sends first information to a first terminal device.

The second terminal device may send the first information to the first terminal device based on measurement results of beam reference signals of beams of a network device. Optionally, the second terminal device may further send uplink data to the first terminal device.

For descriptions of the first information, refer to related descriptions shown in FIG. 3. Details are not described herein again.

Step 802: The first terminal device sends identification information of the second terminal device, the first information, and second information to the network device.

Optionally, the first terminal device may send the uplink data of the second terminal device to the network device.

The first terminal device may send the identification information, the first information, and the second information to the network device by using a first beam selected by the first terminal device.

The network device may determine, based on the second information, whether downlink data of the second terminal device is to be forwarded by the first terminal device. The following step 803 to step 805 are an example procedure in which the network device determines that the downlink data of the second terminal device is to be forwarded by the first terminal device.

Step 803: The network device sends the downlink data of the second terminal device to the first terminal device.

The network device may send the downlink data of the second terminal device to the first terminal device by using the first beam. The downlink data herein may include the identification information of the second terminal device or indication information of the identification information.

Step 804: The first terminal device detects DCI within a time range T1.

The time range T1 herein may be predefined in a protocol, or may be preset. This is not specifically limited in this application. When detecting the DCI, the first terminal device may search in a detection window based on identification information of the first terminal device and/or cluster identification information. The DCI herein is for scheduling a PDSCH carrying the downlink data of the second terminal device.

Step 805: The first terminal device sends the downlink data of the second terminal device to the second terminal device within a time range T2.

The time range T2 herein may be predefined in a protocol, or may be preset. This is not specifically limited in this application. The first terminal device may include the downlink data in a PSSCH or a PSCCH.

The following step 806 and step 807 are an example flowchart in which the network device determines that the downlink data of the second terminal device is not to be forwarded by the first terminal device.

Step 806: The network device sends the downlink data to the second terminal device within a time range T3 by using a second beam selected by the second terminal device.

The time range T3 herein may be predefined in a protocol, or may be preset. This is not specifically limited in this application.

Step 807: The first terminal device detects DCI within the time range T3.

Because the first terminal device does not know the decision of the network device, in other words, the first terminal device does not know whether the downlink data of the second terminal device is to be forwarded by the first terminal device, the first terminal device still needs to detect the DCI. When detecting the DCI, the first terminal device may search in a detection window based on identification information of the first terminal device and/or cluster identification information. The DCI herein is for scheduling a PDSCH carrying the downlink data of the second terminal device.

Step 808: The second terminal device detects the DCI within the time range T3, and detects SCI within the time range T2.

Because the second terminal device does not know whether the first terminal device is to forward the downlink data from the network device or the network device is to send the downlink data, the second terminal device needs to detect the DCI and the SCI, to receive the downlink data. The second terminal device may search for the DCI and the SCI in the detection window based on the identification information of the second terminal device and/or the cluster identification information. The DCI is for scheduling the PDSCH carrying the downlink data, and the SCI is for scheduling the PSSCH or the PSCCH carrying the downlink data.

In an embodiment, the network device may send third indication information to the first terminal device. The third indication information herein may indicate that the downlink data of the second terminal device is to be forwarded by the first terminal device, or the third indication information may indicate that the downlink data of the second terminal device is to be sent by the network device. Therefore, the first terminal device may further send second indication information to the second terminal device based on the third indication information. If the third indication information indicates that the downlink data of the second terminal device is to be forwarded by the first terminal device, the second indication information indicates that the downlink data of the second terminal device is to be forwarded by the first terminal device. If the third indication information indicates that the downlink data of the second terminal device is to be sent by the network device, the second indication information indicates that the downlink data of the second terminal device is to be sent by the network device.

Optionally, the network device may send fourth indication information to the second terminal device. The fourth indication information herein may indicate that the downlink data of the second terminal device is to be sent by the network device. For example, if the downlink data of the second terminal device is to be sent by the network device, the network device may send the fourth indication information to the second terminal device. The second terminal device may search for the DCI in the detection window based on the fourth indication information. If the second terminal device does not receive the fourth indication information, the second terminal device may consider by default that the downlink data is to be forwarded by the first terminal device. Therefore, the second terminal device may search for the SCI in the detection window

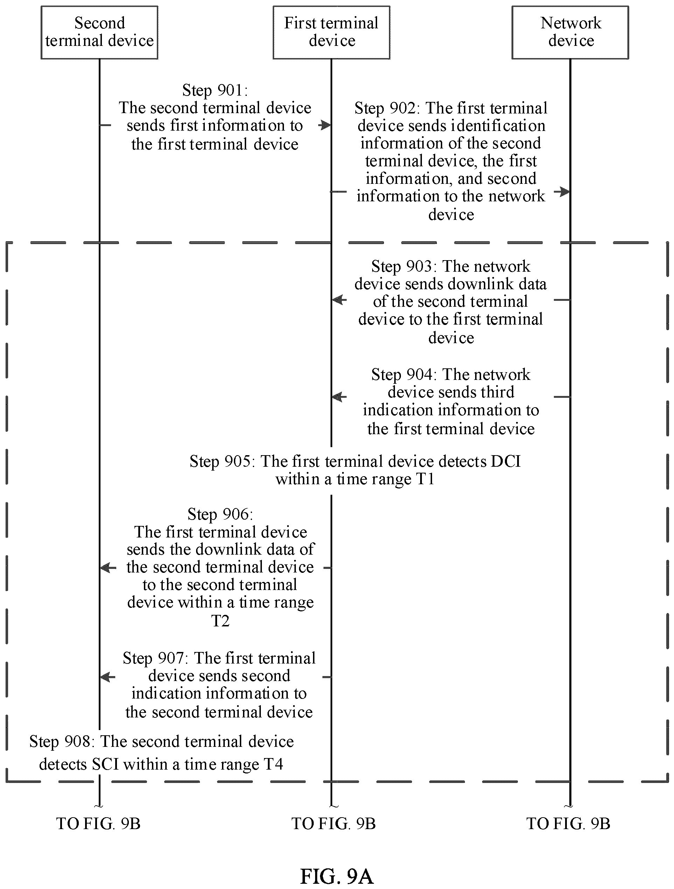

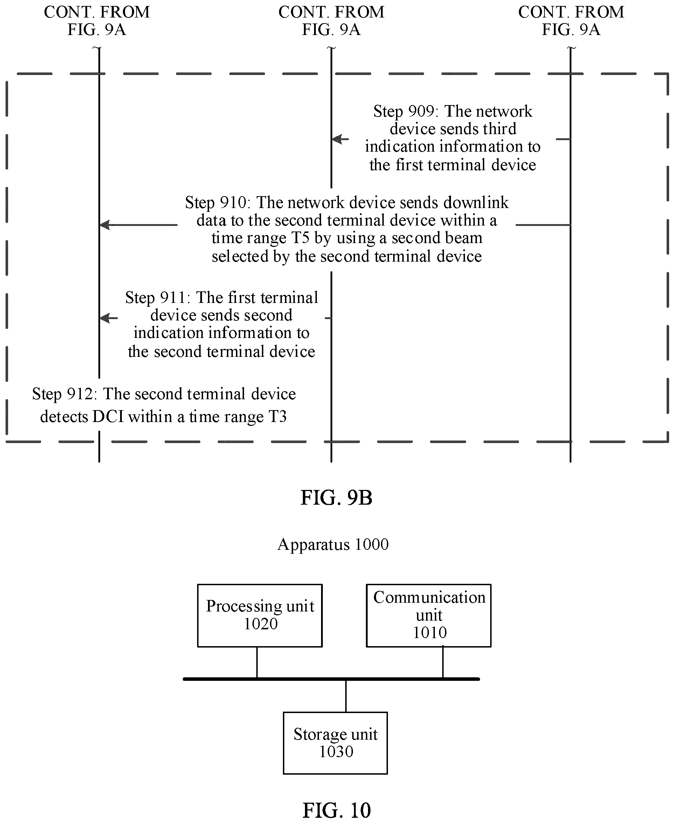

FIG. 9A and FIG. 9B are an example flowchart of a communication method according to an embodiment of this application from a perspective of device interaction. The method may include the following steps.

Step 901 to step 903 may be the same as step 801 to step 803 shown in FIG. 8.

Step 904: The network device sends third indication information to the first terminal device.

The third indication information herein indicates that the downlink data of the second terminal device is to be forwarded by the first terminal device. It should be understood that an execution sequence of step 903 and step 904 is not limited to the sequence shown in FIG. 9A. Step 904 may be performed before step 903, or step 903 and step 904 may be performed simultaneously.

Step 905 and step 906 may be the same as step 804 and step 805 shown in FIG. 8.

Step 907: The first terminal device sends second indication information to the second terminal device.

The second indication information herein may indicate that the downlink data of the second terminal device is to be forwarded by the first terminal device. It should be understood that an execution sequence of step 906 and step 907 is not limited to the sequence shown in FIG. 9A. Step 907 may be performed before step 906, or step 906 and step 907 may be performed simultaneously.

Step 908: The second terminal device detects SCI within the time range T2.

The second terminal device may search for the SCI in the detection window based on the identification information of the second terminal device and/or the cluster identification information. The SCI is for scheduling a PSSCH or a PSCCH carrying the downlink data.

The foregoing step 904 to step 908 are an example procedure in which the network device determines that the first terminal device is to forward the downlink data of the second terminal device, and sends the third indication information to the first terminal device.

The following step 909 to step 912 are an example procedure in which the network device determines to send the downlink data to the second terminal device, and sends third indication information to the first terminal device.

Step 909: The network device sends the third indication information to the first terminal device.

The third indication information herein indicates that the downlink data of the second terminal device is to be sent by the network device. It should be understood that an execution sequence of step 903 and step 909 is not limited to the sequence shown in FIG. 9A and FIG. 9B. Step 909 may be performed before step 903, or step 903 and step 909 may be performed simultaneously.

Step 910: The network device sends the downlink data to the second terminal device within a time range T3 by using a second beam selected by the second terminal device.

Step 911: The first terminal device sends second indication information to the second terminal device.

The second indication information herein may indicate that the downlink data of the second terminal device is to be sent by the network device.

Step 912: The second terminal device detects DCI within the time range T3.

The time range T3 herein may be predefined in a protocol, or may be preset. This is not specifically limited in this application. The second terminal device may search for the DCI in a detection window based on the identification information of the second terminal device and/or cluster identification information. The DCI is for scheduling a PDSCH or a PDSCH carrying the downlink data.

Based on a same technical concept as the foregoing communication method, as shown in FIG. 10, an apparatus 1000 having a communication function is provided. The apparatus 1000 can perform the steps performed by the first terminal device or the second terminal device in the foregoing method. To avoid repetition, details are not described herein again. The apparatus 1000 includes a communication unit 1010 and a processing unit 1020, and optionally, further includes a storage unit 1030. The processing unit 1020 may be separately connected to the storage unit 1030 and the communication unit 1010, or the storage unit 1030 may be connected to the communication unit 1010. The processing unit 1020 may be integrated with the storage unit 1030.

The storage unit 1030 is configured to store a computer program.

For example, when the communication apparatus 1000 performs the steps performed by the first terminal device, the communication unit 1010 is configured to receive first information sent by the second terminal device. For descriptions of the first information herein, refer to related descriptions shown in FIG. 3. Details are not described herein again. The communication unit 1010 may send identification information of the second terminal device to a network device, or may send identification information and the first information to a network device.

In a design, the processing unit 1020 may be configured to determine, based on second information, whether to send the identification information to the network device through the communication unit 1010 or send the identification information and the first information to the network device through the communication unit 1010. For descriptions of the second information, refer to related descriptions shown in FIG. 3. Details are not described herein again.

In a design, the communication unit 1010 may be configured to send the second information to the network device. The communication unit 1010 may further be configured to receive first indication information of the network device.

In a design, if third information indicates that the second terminal device expects to receive downlink data sent by the network device, the processing unit 1020 may be configured to send the identification information of the second terminal device and the first information to the network device through the communication unit 1010. If third information indicates that the second terminal device expects to receive downlink data forwarded by the first terminal device, the processing unit 1020 may be configured to send the identification information to the network device through the communication unit 1010.

In a design, the communication unit 1010 may be configured to: when sending the identification information and the first information to the network device, send the identification information to the network device on a time-frequency resource associated with a second beam selected by the second terminal device.

In a design, the communication unit 1010 may be configured to send second indication information to the second terminal device. For descriptions of the second indication information, refer to related descriptions shown in FIG. 3.

For example, when the apparatus 1000 performs the steps performed by the second terminal device, the processing unit 1020 may send first information to the first terminal device based on a measurement result of a beam reference signal of a beam of a network device through the communication unit 1010. For descriptions of the first information, refer to related descriptions in the method embodiment shown in FIG. 3. The communication unit 1010 may receive data. The data is downlink data sent by the network device, or the data is downlink data that is from the network device and that is forwarded by the first terminal device.

In a design, the communication unit 1010 may be configured to receive second indication information. For descriptions of the second indication information herein, refer to related descriptions shown in FIG. 3. The processing unit 1020 may be configured to receive, through the communication unit 1010 based on the second indication information, the downlink data sent by the network device or the downlink data that is from the network device and that is forwarded by the first terminal device.

In a design, if third information indicates that the second terminal device expects to receive the downlink data sent by the network device, the communication unit 1010 is configured to receive the downlink data sent by the network device. If third information indicates that the second terminal device expects to receive the downlink data forwarded by the first terminal device, the communication unit 1010 is configured to receive the downlink data forwarded by the first terminal device.

The apparatus may alternatively be a chip. The communication unit may be an input/output circuit or an interface of the chip. The processing unit may be a logic circuit. The logic circuit may process to-be-processed data based on the steps described in the foregoing method aspects, to obtain processed data. The output circuit/interface is configured to output the processed data.

An embodiment of this application further provides a terminal device. The terminal device may be a terminal device or a circuit. The terminal device may be configured to perform the actions performed by the first terminal device and the second terminal device in the foregoing method embodiments.

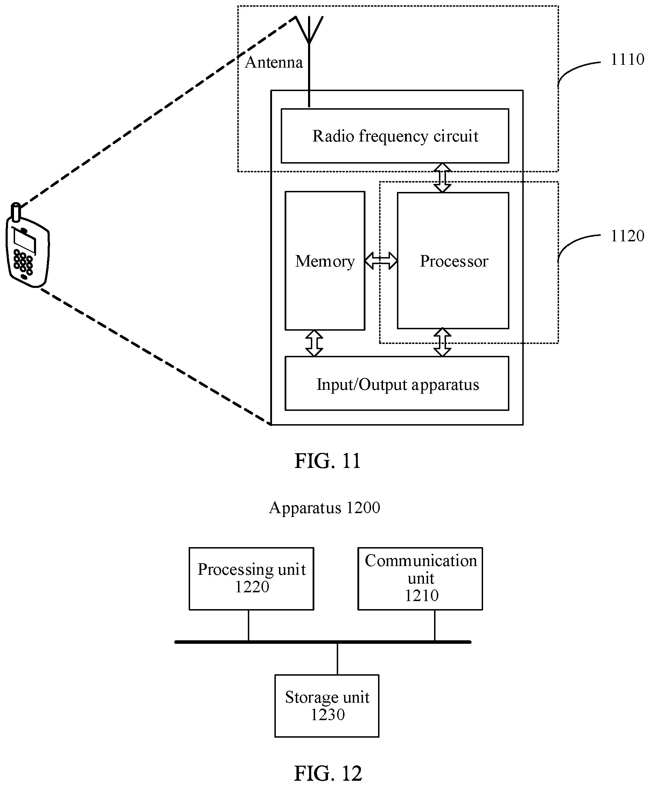

FIG. 11 is a simplified schematic diagram of a structure of a terminal device. For ease of understanding and ease of illustration, in FIG. 11, an example in which the terminal device is a mobile phone is used. As shown in FIG. 11, the terminal device includes a processor, a memory, a radio frequency circuit, an antenna, and an input/output apparatus. The processor is mainly configured to: process a communications protocol and communications data, control the terminal device, execute a software program, process data of the software program, and the like. The memory is mainly configured to store the software program and data. The radio frequency circuit is mainly configured to: perform conversion between a baseband signal and a radio frequency signal, and process the radio frequency signal. The antenna is mainly configured to receive and send a radio frequency signal in a form of an electromagnetic wave. The input/output apparatus, for example, a touchscreen, a display, or a keyboard, is mainly configured to: receive data input by a user and output data to the user. It should be noted that some types of terminal devices may have no input/output apparatus.

When needing to send data, after performing baseband processing on the to-be-sent data, the processor outputs a baseband signal to the radio frequency circuit; and the radio frequency circuit performs radio frequency processing on the baseband signal and then sends the radio frequency signal to the outside in a form of an electromagnetic wave through the antenna. When data is sent to the terminal device, the radio frequency circuit receives the radio frequency signal through the antenna, converts the radio frequency signal into a baseband signal, and outputs the baseband signal to the processor. The processor converts the baseband signal into data, and processes the data. For ease of description, FIG. 11 shows only one memory and one processor. In an actual terminal device product, there may be one or more processors and one or more memories. The memory may also be referred to as a storage medium, a storage device, or the like. The memory may be disposed independent of the processor, or may be integrated with the processor. This is not limited in embodiments of this application.

In this embodiment of this application, an antenna and a radio frequency circuit that have sending and receiving functions may be considered as a communication unit of the terminal device, and a processor that has a processing function may be considered as a processing unit of the terminal device. As shown in FIG. 11, the terminal device includes a communication unit 1110 and a processing unit 1120. The communication unit may also be referred to as a transceiver, a transceiver apparatus, or the like. The processing unit may also be referred to as a processor, a processing board, a processing module, a processing apparatus, or the like. Optionally, a component that is in the communication unit 1110 and that is configured to implement the receiving function may be considered as a receiving unit, and a component that is in the communication unit 1110 and that is configured to implement the sending function may be considered as a sending unit. That is, the communication unit 1110 includes the receiving unit and the sending unit. The communication unit sometimes may also be referred to as a transceiver, a transceiver circuit, or the like. The receiving unit sometimes may also be referred to as a receiver, a receive circuit, or the like. The sending unit sometimes may also be referred to as a transmitter, a transmit circuit, or the like.

It should be understood that the communication unit 1110 is configured to perform a sending operation and a receiving operation on the first terminal device side and the second terminal device side in the foregoing method embodiments, and the processing unit 1120 is configured to perform an operation other than the sending operation and the receiving operation on the first terminal device and the second terminal device in the foregoing method embodiments.

For example, in an implementation, the communication unit 1110 is configured to perform the sending operation and/or the receiving operation on the first terminal device side and the second terminal device side in step 301 to step 303 in FIG. 3, and/or the communication unit 1110 is further configured to perform other sending and receiving steps on the first terminal device side and the second terminal device side in embodiments of this application. The processing unit 1120 is configured to perform other processing steps on the first terminal device side and the second terminal device side in embodiments of this application.

When the terminal device is a chip apparatus or circuit, the apparatus may include a communication unit and a processing unit. The communication unit may be an input/output circuit and/or a communication interface. The processing unit is an integrated processor, a microprocessor, or an integrated circuit.

Based on a same technical concept as the foregoing communication method, as shown in FIG. 12, an apparatus 1200 having a communication function is provided. The apparatus 1200 can perform the steps performed by the network device in the foregoing method. To avoid repetition, details are not described herein again. The apparatus 1200 includes a communication unit 1210 and a processing unit 1220, and optionally, further includes a storage unit 1230. The processing unit 1220 may be separately connected to the storage unit 1230 and the communication unit 1210, or the storage unit 1230 may be connected to the communication unit 1210. The processing unit 1220 may be integrated with the storage unit 1230.

The storage unit 1230 is configured to store a computer program.

For example, the communication unit 1210 is configured to receive identification information of a second terminal device that is sent by a first terminal device. For the identification information herein, refer to related descriptions in the method embodiment shown in FIG. 3. Details are not described herein again. The communication unit 1210 is further configured to send downlink data of the second terminal device to the second terminal device by using a second beam selected by the second terminal device, or send, for the network device, downlink data of the second terminal device to the first terminal device by using a first beam selected by the first terminal device.

In a design, the processing unit 1220 is configured to determine, based on second information, to send the downlink data of the second terminal device to the second terminal device through the communication unit 1210 by using the second beam selected by the second terminal device, or send the downlink data of the second terminal device to the first terminal device through the communication unit 1210 by using the first beam selected by the first terminal device. For the second information herein, refer to related descriptions in the method embodiment shown in FIG. 3. Details are not described herein again.

In a design, if third information indicates that the second terminal device expects to receive the downlink data sent by the network device, the communication unit 1210 may be configured to send the downlink data of the second terminal device to the second terminal device by using the second beam selected by the second terminal device. If third information indicates that the second terminal device expects to receive the downlink data forwarded by the first terminal device, the communication unit 1210 may be configured to send the downlink data of the second terminal device to the first terminal device by using the first beam selected by the first terminal device.

In a design, the communication unit 1210 may be configured to receive information about the first beam that is sent by the first terminal device. For the first beam herein, refer to related descriptions in the method embodiment shown in FIG. 3. The processing unit 1220 may be configured to determine, based on the information about the first beam, to send the downlink data of the second terminal device to the first terminal device through the communication unit 1210 by using the first beam selected by the first terminal device.

In a design, the communication unit 1210 may be configured to receive first information of the second terminal device that is sent by the first terminal device. The first information indicates information about the second beam selected by the second terminal device. For the second beam herein, refer to related descriptions in the method embodiment shown in FIG. 3.

The processing unit 1220 may be configured to determine, based on the information about the second beam, to send the downlink data of the second terminal device to the second terminal device through the communication unit 1210 by using the second beam selected by the second terminal device.

The apparatus may alternatively be a chip. The communication unit may be an input/output circuit or an interface of the chip. The processing unit may be a logic circuit. The logic circuit may process to-be-processed data based on the steps described in the foregoing method aspects, to obtain processed data. The to-be-processed data may be data received by the input circuit/interface. The output circuit/interface is configured to output the processed data.

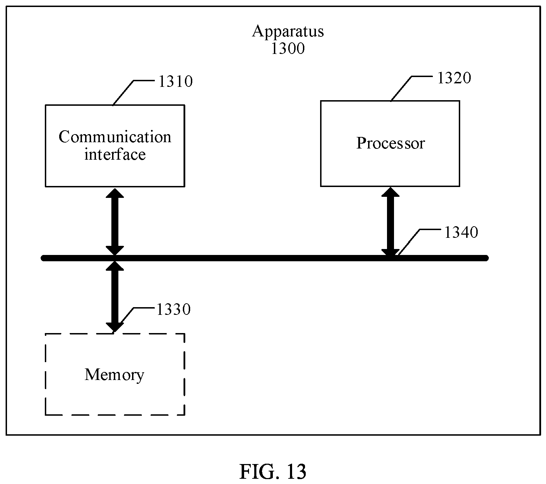

FIG. 13 shows an apparatus 1300 having a communication function according to an embodiment of this application. The apparatus 1300 is configured to implement functions of the first terminal device, the second terminal device, and the network device in the foregoing methods. The apparatus may be the first terminal device, the second terminal device, or the network device, or may be a chip with a function similar to that of the first terminal device, the second terminal device, or the network device, or may be an apparatus that can be used with the first terminal device, the second terminal device, or the network device.

The apparatus 1300 includes at least one processor 1320, configured to implement the functions of the first terminal device, the second terminal device, and the network device in the methods provided in embodiments of this application. The apparatus 1300 may further include a communication interface 1310. In embodiments of this application, the communication interface may be a transceiver, a circuit, a bus, a module, or a communication interface of another type, and is configured to communicate with another device through a transmission medium. For example, the communication interface 1310 is used by an apparatus in the apparatus 1300 to communicate with another device. When the apparatus 1300 is the first terminal device and the second terminal device, the processor 1320 may complete a function of the processing unit 1020 shown in FIG. 10, and the communication interface 1310 may complete a function of the communication unit 1010 shown in FIG. 10. When the apparatus 1300 is the network device, the processor 1320 may complete a function of the processing unit 1220 shown in FIG. 12, and the communication interface 1310 may complete a function of the communication unit 1210 shown in FIG. 12.

The apparatus 1300 may further include at least one memory 1330, configured to store program instructions and/or data. The memory 1330 is coupled to the processor 1320. The coupling in this embodiment of this application may be an indirect coupling or a communication connection between apparatuses, units, or modules in an electrical form, a mechanical form, or another form, and is used for information exchange between the apparatuses, the units, or the modules. The processor 1320 may operate in collaboration with the memory 1330. The processor 1320 may execute the program instructions stored in the memory 1330. At least one of the at least one memory may be included in the processor.

In this embodiment of this application, a specific connection medium between the communication interface 1310, the processor 1320, and the memory 1330 is not limited. In this embodiment of this application, in FIG. 13, the memory 1330, the processor 1320, and the communication interface 1310 are connected through a bus 1340. The bus is represented by a bold line in FIG. 13. A connection manner between other components is merely an example for description, and is not limited thereto. The bus may be classified into an address bus, a data bus, a control bus, and the like. For ease of representation, only one bold line is used to represent the bus in FIG. 13, but this does not mean that there is only one bus or only one type of bus.

In another form of this embodiment, a computer-readable storage medium is provided. The computer-readable storage medium stores instructions. When the instructions are executed, the method on the network device side, the first terminal device side, or the second terminal device side in the foregoing method embodiments is performed.

In another form of this embodiment, a computer program product including instructions is provided. When the instructions are executed, the method on the first terminal device side, the second terminal device side, or the network device side in the foregoing method embodiments is performed.

In another form of this embodiment, a communication system is provided. The system may include the at least one first terminal device, the at least one second terminal device, and the at least one network device.

It should be understood that the processor mentioned in embodiments of the present invention may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a discrete gate or a transistor logic device, a discrete hardware component, or the like. The general-purpose processor may be a microprocessor, or the processor may be any conventional processor or the like.

It may be understood that the memory mentioned in embodiments of the present invention may be a volatile memory or a nonvolatile memory, or may include a volatile memory and a nonvolatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), used as an external cache. By way of example and not limitation, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM).

It should be noted that when the processor is a general-purpose processor, a DSP, an ASIC, an FPGA or another programmable logic device, a discrete gate or a transistor logic device, or a discrete hardware component, the memory (a storage module) is integrated into the processor.

It should be noted that the memory described in this specification aims to include but is not limited to these memories and any memory of another proper type.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of the present invention.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division, and there may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one location, or may be distributed on a plurality of network units. Some or all of the units may be selected according to actual requirements to achieve the objectives of the solutions of embodiments.

In addition, functional units in embodiments of this application may be integrated into one processing unit, each of the units may exist independently physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving, by a first terminal device, first information sent by a second terminal device, wherein the first information comprises information indicating a second beam selected by the second terminal device; and
sending, by the first terminal device, identification information of the second terminal device to a network device, or sending, by the first terminal device, identification information and the first information to a network device, wherein
the first terminal device is a cluster head node, and the second terminal device is a member node of a cluster to which the first terminal device belongs.

2. The method according to claim 1, wherein the sending, by the first terminal device, identification information of the second terminal device to a network device, or sending, by the first terminal device, identification information and the first information to a network device comprises:
determining, by the first terminal device based on second information, whether to send the identification information to the network device or send the identification information and the first information to the network device, wherein
the second information is information required for determining whether the first terminal device is to forward downlink data that is sent by the network device to the second terminal device.

3. The method according to claim 1 or 2, wherein the method further comprises:
sending, by the first terminal device, the second information to the network device, wherein the second information is the information required for determining whether the first terminal device is to forward the downlink data of the second terminal device; and
the sending, by the first terminal device, identification information to a network device, or sending, by the first terminal device, identification information and the first information to a network device comprises:
receiving, by the first terminal device, first indication information of the network device, and sending the identification information to the network device, or sending the identification information and the first information to the network device.

4. The method according to any one of claims 1 to 3, wherein the first information further comprises at least one of the following:
quality of a sidelink channel between the first terminal device and the second terminal device, quality of a downlink channel between the second terminal device and the network device, or third information of the second terminal device, wherein the third information indicates that the second terminal device expects to receive the downlink data sent by the network device, or indicates that the second terminal device expects to receive the downlink data forwarded by the first terminal device.

5. The method according to any one of claims 1 to 4, wherein the second information comprises at least one of the following:
the quality of the sidelink channel between the first terminal device and the second terminal device, quality of a downlink channel between the first terminal device and the network device, the quality of the downlink channel between the second terminal device and the network device, load information of the first terminal device, or the third information, wherein the third information indicates that the second terminal device expects to receive the downlink data sent by the network device, or indicates that the second terminal device expects to receive the downlink data forwarded by the first terminal device.

6. The method according to claim 4 or 5, wherein the sending, by the first terminal device, identification information of the second terminal device to a network device, or sending, by the first terminal device, identification information and the first information to a network device comprises:
if the third information in the first information indicates that the second terminal device expects to receive the downlink data sent by the network device, sending, by the first terminal device, the identification information of the second terminal device and the first information to the network device; or
if the third information in the first information indicates that the second terminal device expects to receive the downlink data forwarded by the first terminal device, sending, by the first terminal device, the identification information to the network device.

7. The method according to any one of claims 1 to 6, wherein the sending, by the first terminal device, identification information and the first information to a network device comprises:
sending, by the first terminal device, the identification information to the network device on a time-frequency resource associated with the second beam selected by the second terminal device.

8. The method according to any one of claims 1 to 7, wherein the method further comprises:
sending, by the first terminal device, second indication information to the second terminal device, wherein the second indication information indicates that the downlink data of the second terminal device is to be sent by the network device, or the second indication information indicates that the downlink data of the second terminal device is to be forwarded by the first terminal device.

9. A communication method, comprising:
receiving, by a network device, identification information of a second terminal device that is sent by a first terminal device; and
sending, by the network device, downlink data of the second terminal device to the second terminal device by using a second beam selected by the second terminal device, or sending, by the network device, downlink data of the second terminal device to the first terminal device by using a first beam selected by the first terminal device, wherein
the first terminal device is a cluster head node, and the second terminal device is a member node of a cluster to which the first terminal device belongs.

10. The method according to claim 9, wherein the sending, by the network device, downlink data of the second terminal device to the second terminal device by using a second beam selected by the second terminal device, or sending, by the network device, downlink data of the second terminal device to the first terminal device by using a first beam selected by the first terminal device comprises:
sending, by the network device based on second information, the downlink data of the second terminal device to the second terminal device by using the second beam selected by the second terminal device, or sending by the network device based on second information, the downlink data of the second terminal device to the first terminal device by using the first beam selected by the first terminal device, wherein the second information is information required for determining whether the first terminal device is to forward the downlink data of the second terminal device.

11. The method according to claim 10, wherein the second information comprises at least one of the following:
quality of a sidelink channel between the first terminal device and the second terminal device, quality of a downlink channel between the first terminal device and the network device, quality of a downlink channel between the second terminal device and the network device, load information of the first terminal device, or third information, wherein the third information indicates that the second terminal device expects to receive the downlink data sent by the network device, or indicates that the second terminal device expects to receive the downlink data forwarded by the first terminal device.

12. The method according to claim 10 or 11, wherein the sending, by the network device, downlink data of the second terminal device to the second terminal device by using a second beam selected by the second terminal device, or sending, by the network device, downlink data of the second terminal device to the first terminal device by using a first beam selected by the first terminal device comprises:
if the third information in the second information indicates that the second terminal device expects to receive the downlink data sent by the network device, sending, by the network device, the downlink data of the second terminal device to the second terminal device by using the second beam selected by the second terminal device; or
if the third information in the second information indicates that the second terminal device expects to receive the downlink data forwarded by the first terminal device, sending, by the network device, the downlink data of the second terminal device to the first terminal device by using the first beam selected by the first terminal device.

13. The method according to any one of claims 9 to 12, wherein the method further comprises:
receiving, by the network device, information about the first beam that is sent by the first terminal device, wherein the first beam is a beam selected by the first terminal device; and
determining, by the network device based on the information about the first beam, to send the downlink data of the second terminal device to the first terminal device by using the first beam selected by the first terminal device.

14. The method according to any one of claims 9 to 13, wherein the method further comprises:
receiving, by the network device, first information of the second terminal device that is sent by the first terminal device, wherein the first information indicates information about the second beam selected by the second terminal device; and
determining, by the network device based on the information about the second beam, to send the downlink data of the second terminal device to the second terminal device by using the second beam selected by the second terminal device.

15. The method according to any one of claims 9 to 14, wherein the second beam is a beam determined based on a time-frequency resource for receiving the identification information.

16. A communication method, comprising:
sending, by a second terminal device, first information to a first terminal device based on a measurement result of a beam of a network device, wherein the first information indicates information about a second beam selected by the second terminal device; and
receiving, by the second terminal device, data, wherein the data is downlink data sent by the network device, or the data is downlink data that is from the network device and that is forwarded by the first terminal device; and the first terminal device is a cluster head node, and the second terminal device is a member node of a cluster to which the first terminal device belongs.

17. The method according to claim 16, wherein the method further comprises:
receiving, by the second terminal device, second indication information, wherein the second indication information indicates whether the first terminal device is to forward the downlink data of the second terminal device; and
receiving, by the second terminal device based on the second indication information, the downlink data sent by the network device or the downlink data that is from the network device and that is forwarded by the first terminal device.

18. The method according to claim 16 or 17, wherein the first information comprises at least one of the following: quality of a sidelink channel between the first terminal device and the second terminal device, quality of a downlink channel between the second terminal device and the network device, or third information of the second terminal device, wherein the third information indicates that the second terminal device expects to receive the downlink data sent by the network device, or indicates that the second terminal device expects to receive the downlink data forwarded by the first terminal device.

19. The method according to claim 18, wherein the method further comprises:
if the third information in the first information indicates that the second terminal device expects to receive the downlink data sent by the network device, receiving, by the second terminal device, the downlink data sent by the network device; or
if the third information in the first information indicates that the second terminal device expects to receive the downlink data forwarded by the first terminal device, receiving, by the second terminal device, the downlink data forwarded by the first terminal device.

20. A communication apparatus, comprising a communication unit and a processing unit, wherein
the processing unit is configured to receive, through the communication unit, first information sent by a second terminal device, wherein the first information comprises information indicating a second beam selected by the second terminal device; and
the processing unit is further configured to send identification information of the second terminal device to a network device through the communication unit, or send identification information and the first information to a network device through the communication unit, wherein
the apparatus is a cluster head node, and the second terminal device is a member node in a cluster to which the apparatus belongs.

21. The apparatus according to claim 20, wherein when sending the identification information of the second terminal device to the network device through the communication unit, or sending the identification information and the first information to the network device through the communication unit, the processing unit is specifically configured to:
determine, based on second information, whether to send the identification information to the network device or send the identification information and the first information to the network device, wherein the second information is information required for determining whether the apparatus is to forward downlink data that is sent by the network device to the second terminal device.

22. The apparatus according to claim 20 or 21, wherein the processing unit is further configured to:
send the second information to the network device through the communication unit, wherein the second information is the information required for determining whether the apparatus is to forward the downlink data of the second terminal device; and
when sending the identification information to the network device through the communication unit, or sending the identification information and the first information to the network device through the communication unit, the processing unit is specifically configured to:
receive first indication information of the network device, and send the identification information to the network device, or send the identification information and the first information to the network device.

23. The apparatus according to any one of claims 20 to 22, wherein the first information further comprises at least one of the following:
quality of a sidelink channel between a first terminal device and the second terminal device, quality of a downlink channel between the second terminal device and the network device, or third information of the second terminal device, wherein the third information indicates that the second terminal device expects to receive the downlink data sent by the network device, or indicates that the second terminal device expects to receive the downlink data forwarded by the first terminal device.

24. The apparatus according to any one of claims 20 to 23, wherein the second information comprises at least one of the following:
the quality of the sidelink channel between the first terminal device and the second terminal device, quality of a downlink channel between the first terminal device and the network device, the quality of the downlink channel between the second terminal device and the network device, load information of the first terminal device, or the third information, wherein the third information indicates that the second terminal device expects to receive the downlink data sent by the network device, or indicates that the second terminal device expects to receive the downlink data forwarded by the first terminal device.

25. The apparatus according to claim 23 or 24, wherein when sending the identification information of the second terminal device to the network device through the communication unit, or sending the identification information and the first information to the network device through the communication unit, the processing unit is specifically configured to:
if the third information in the first information indicates that the second terminal device expects to receive the downlink data sent by the network device, send, for the first terminal device, the identification information of the second terminal device and the first information to the network device; or
if the third information in the first information indicates that the second terminal device expects to receive the downlink data forwarded by the first terminal device, send, for the first terminal device, the identification information to the network device.

26. The apparatus according to any one of claims 20 to 25, wherein when sending the identification information and the first information to the network device through the communication unit, the processing unit is specifically configured to:
send the identification information to the network device on a time-frequency resource associated with the second beam selected by the second terminal device.

27. The apparatus according to any one of claims 20 to 26, wherein the processing unit is further configured to:
send second indication information to the second terminal device through the communication unit, wherein the second indication information indicates that the downlink data of the second terminal device is to be sent by the network device, or the second indication information indicates that the downlink data of the second terminal device is to be forwarded by the apparatus.

28. A communication apparatus, comprising a processing unit and a communication unit, wherein
the processing unit is configured to receive, through the communication unit, identification information of a second terminal device that is sent by a first terminal device; and
the processing unit is further configured to send, through the communication unit, downlink data of the second terminal device to the second terminal device by using a second beam selected by the second terminal device, or send, through the communication unit, downlink data of the second terminal device to the first terminal device by using a first beam selected by the first terminal device, wherein
the first terminal device is a cluster head node, and the second terminal device is a member node of a cluster to which the first terminal device belongs.

29. The apparatus according to claim 28, wherein when sending, through the communication unit, the downlink data of the second terminal device to the second terminal device by using the second beam selected by the second terminal device, or sending, through the communication unit, the downlink data of the second terminal device to the first terminal device by using the first beam selected by the first terminal device, the processing unit is specifically configured to:
send, based on second information, the downlink data of the second terminal device to the second terminal device by using the second beam selected by the second terminal device, or send, based on second information, the downlink data of the second terminal device to the first terminal device by using the first beam selected by the first terminal device, wherein the second information is information required for determining whether the first terminal device is to forward the downlink data of the second terminal device.

30. The apparatus according to claim 29, wherein the second information comprises at least one of the following:
quality of a sidelink channel between the first terminal device and the second terminal device, quality of a downlink channel between the first terminal device and the network device, quality of a downlink channel between the second terminal device and the network device, load information of the first terminal device, or third information, wherein the third information indicates that the second terminal device expects to receive the downlink data sent by the network device, or indicates that the second terminal device expects to receive the downlink data forwarded by the first terminal device.

31. The apparatus according to claim 28 or 29, wherein when sending, through the communication unit, the downlink data of the second terminal device to the second terminal device by using the second beam selected by the second terminal device, or sending, through the communication unit, the downlink data of the second terminal device to the first terminal device by using the first beam selected by the first terminal device, the processing unit is specifically configured to:
if the third information in the second information indicates that the second terminal device expects to receive the downlink data sent by the network device, send the downlink data of the second terminal device to the second terminal device by using the second beam selected by the second terminal device; or
if the third information in the second information indicates that the second terminal device expects to receive the downlink data forwarded by the first terminal device, send the downlink data of the second terminal device to the first terminal device by using the first beam selected by the first terminal device.

32. The apparatus according to any one of claims 28 to 31, wherein the processing unit is further configured to:
receive, through the communication unit, information about the first beam that is sent by the first terminal device, wherein the first beam is a beam selected by the first terminal device; and
determine, based on the information about the first beam, to send the downlink data of the second terminal device to the first terminal device by using the first beam selected by the first terminal device.

33. The apparatus according to any one of claims 28 to 32, wherein the processing unit is further configured to:
receive, through the communication unit, first information of the second terminal device that is sent by the first terminal device, wherein the first information indicates information about the second beam selected by the second terminal device; and
determine, based on the information about the second beam, to send the downlink data of the second terminal device to the second terminal device by using the second beam selected by the second terminal device.

34. The apparatus according to any one of claims 28 to 33, wherein the second beam is a beam determined based on a time-frequency resource for receiving the identification information.

35. A communication apparatus, comprising a processing unit and a communication unit, wherein
the processing unit is configured to send first information to a first terminal device through the communication unit based on a measurement result of a beam of a network device, wherein the first information indicates information about a second beam selected by a second terminal device; and
the processing unit is further configured to receive data through the communication unit, wherein the data is downlink data sent by the network device, or the data is downlink data that is from the network device and that is forwarded by the first terminal device; and the first terminal device is a cluster head node, and the apparatus is a member node in a cluster to which the first terminal device belongs.

36. The apparatus according to claim 35, wherein the processing unit is further configured to:
receive second indication information through the communication unit, wherein the second indication information indicates whether the first terminal device is to forward the downlink data of the apparatus; and
receive, through the communication unit based on the second indication information, the downlink data sent by the network device or the downlink data that is from the network device and that is forwarded by the first terminal device.

37. The apparatus according to claim 35 or 36, wherein the first information comprises at least one of the following: quality of a sidelink channel between the first terminal device and the second terminal device, quality of a downlink channel between the second terminal device and the network device, or third information of the second terminal device, wherein the third information indicates that the second terminal device expects to receive the downlink data sent by the network device, or indicates that the second terminal device expects to receive the downlink data forwarded by the first terminal device.

38. The apparatus according to claim 37, wherein the processing unit is further configured to:
if the third information in the first information indicates that the second terminal device expects to receive the downlink data sent by the network device, receive, through the communication unit, the downlink data sent by the network device; or
if the third information in the first information indicates that the second terminal device expects to receive the downlink data forwarded by the first terminal device, receive, through the communication unit, the downlink data forwarded by the first terminal device.

39. A communication apparatus, comprising a processor and a memory, wherein
the memory is configured to store a computer program or instructions; and
the processor is configured to execute the computer program or the instructions in the memory, so that the method according to any one of claims 1 to 8 is performed, the method according to any one of claims 9 to 15 is performed, or the method according to any one of claims 16 to 19 is performed.

40. A computer-readable storage medium, wherein the computer-readable storage medium stores computer-executable instructions; and when the computer-executable instructions are invoked by a computer, the computer is enabled to perform the method according to any one of claims 1 to 8, or perform the method according to any one of claims 9 to 15, or perform the method according to any one of claims 16 to 19.
